(19)

Europäisches
Patentamt
European
Patent Office
Office européen
des brevets

(11)　**EP 2 366 997 B1**

(12)　**EUROPEAN PATENT SPECIFICATION**

(45) Date of publication and mention
of the grant of the patent:
**18.07.2012   Bulletin 2012/29**

(51) Int Cl.:
*G01N 29/44* (2006.01)　　　*G01N 29/06* (2006.01)

(21) Application number: **10156702.2**

(22) Date of filing: **17.03.2010**

(54) **Method and device for determining the structural organization of an object with ultrasounds**

Verfahren und Vorrichtung zur Bestimmung der strukturellen Organisation eines Gegenstands mit Ultraschall

Procédé et dispositif pour déterminer l'organisation structurelle d'un objet avec des ultrasons

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**21.09.2011   Bulletin 2011/38**

(73) Proprietors:
• **Esaote S.p.A.**
**20122 Milano (IT)**
• **Actis Active Sensors S.r.l.**
**50041 Calenzano (IT)**

(72) Inventors:
• **Masotti, Leonardo**
**50010, Sesto Fiorentino (FI) (IT)**
• **Torricelli, Gionatan**
**50144, Firenze (IT)**

(74) Representative: **Bessi, Lorenzo**
**Esaote S.p.A.**
**Via di Caciolle, 15**
**50127 Firenze (IT)**

(56) References cited:
**EP-A2- 1 341 003**　　　**US-A- 5 462 058**
**US-A1- 2007 150 213**

• **MANOJ NARAYANAN V ET AL: "Studies on Ultrasonic Scattering from Quasi-Periodic Structures" IEEE TRANSACTIONS ON ULTRASONICS, FERROELECTRICS AND FREQUENCY CONTROL, IEEE, US LNKD- DOI: 10.1109/58.585205, vol. 44, no. 1, 1 January 1997 (1997-01-01), pages 114-124, XP011062815 ISSN: 0885-3010**

**Description**

The invention relates to the field of characterization of a target object, a medium or a region of interest by determining the modifications induced to a wave interacting with such object, medium or region as, for example, disclosed in EP 1341003.

It has long been known that elastic, electromagnetic or acoustic waves in homogeneous and layered environments in the frequency range of a fraction of a cycle per second up to hundreds of millions of cycles per second and higher can be propagated through many solids and liquids. Elastic waves are waves that propagate through solids, and have components of particle motion both parallel (longitudinal, or pressure, wave) and perpendicular (shear wave) to the direction of propagation of the wave energy itself. In contrast to this, acoustic waves are those waves that generate particle motion that is exclusively parallel to the propagation of wave energy. Electromagnetic waves have components of variation of field strength solely in the direction perpendicular to the direction of propagation.

Many radiology techniques in the medical field or in not-destructive testing involve propagating a wave through a structure to be analysed and determining the modification of one or more parameters of the wave induced by the interaction with such structure. By detecting such modifications through an analysis of the signal received by appropriate transducers/receivers, one or more physical parameter of the structure can be analysed. Ionising and not ionising radiations are usually employed for the purpose, the type of radiation used been function of the nature of the object investigated and of the physical parameter which has to be extracted.

In the ultrasound field, for example, the softness of an insonified object has been proved to be correlated with the backscattered signal amplitude (echogenicity). This is the basis for the well-known echographic inspections where the amplitude, and thus the power, of the reflected ultrasonic echo is used for providing an image of the object in the form of pixels of different brightness located on a bi-dimensional or three-dimensional image. However, such images, although powerful, are not representative of the value assumed by some important structural parameters and therefore are not extensively used for typing objects.

The wave velocity, also called speed of propagation, is an important parameter which has been found to be more deeply related to physical characteristics of an object. In the medical field, for example, the measurement of the velocity of a wave propagating through an object or tissue to be investigated has been extensively used as an important diagnosis tool for a great variety of diseases and alterations. In fact, the speed of propagation can be related to density, elasticity, degree of blood perfusion, hydration and temperature of the tissue. Particularly, it can be shown from the theory of acoustic wave propagation that for a sound wave propagating in a medium, the wave velocity is

$$v_a = \sqrt{\frac{\rho_m}{c_e}}$$

where $\rho_m$ is the density and $c_e$ is the elastic constant of the considered medium. For details see for example Gordon S. Kino, Acoustic Waves: Devices, Imaging, and Analog Signal Processing, Prentice-Hall, INC., Englewood Cliffs, New Jersey, 1987, ISBN 0-13-003047-3 025.

The diagnosis field where speed of propagation detection has been extensively exploited is the in-vivo bone strength evaluation since variations in bone density due to osteoporosis or to physical variation for traumatic events have been proved detectable through ultrasounds. Speed of propagation has also been used for strength evaluation in musculoskeletal tissues and for tissue organization in soft tissue. US patents n. 4,926,870, 4,913,157, 4,361,154 and 5,817,018 disclose some examples on how to measure the global speed of propagation with time of flight estimations. These known techniques are based on the estimation of time of flight of waves, assuming the propagation path known a priori. The propagation speed is considered constant and thus computed simply as a ratio between space (the propagation path) and time necessary for the wave to propagate through such path.

More recent techniques have been developed in order to perform a more accurate estimation of the speed of propagation by introducing some corrections taking into account the contribute of soft tissues surrounding the bone under analysis as disclosed, for example, in US patents n. 5,458,130, 6,221,019, 6,322,507, 6,328,695, 6,899,680 and 7,112,173. Time of flight estimation through multiple lines of sight has also been used for biological region of interest comprising multiple different tissues (see for example US patents n. 4,807,635 and 4,777,958).

Similar techniques have been exploited for density evaluation of different tissue categories like superficial soft tissues and extracorporeal diluted blood as respectively disclosed in US patents n. 5,115,808 and 5,453,576, while US patent n. 7,291,109 discloses how infant hydration can be assessed through a measurement of global speed of propagation in liver and muscle tissues.

The speed of propagation can also be measured by means of resonance spectroscopy of the received signal which furnishes an alternative way to estimate the mean global propagation velocity through a predefined path through signal spectrum analysis as taught by US patent n. 5,062,296.

However all these techniques are based on a global propagation speed estimation which cannot reveal structural variations and thus cannot be used for typing an object. As the propagation speed has been proved strictly related to physical properties of tissues, local estimations of such parameter would allow to provide a two-dimensional or three-dimensional map giving an immediate grasp of the structural organization of tissues thus improving the diagnostic power.

Unfortunately, a direct estimation of local values of the propagation speed is not an easy task to be performed due to the numerous factors influencing such parameter. Several attempts have been made to locally estimate propagation speed as those disclosed, for example, in US patent n. 5,588,032. Such methods are essentially based on solving the so-called inverse scattering problem which requires a relevant amount of computation capacity and time usage. This renders these methods rather complicated although extremely powerful.

The applicant has now observed that the phase of a wave can be smartly used for determining one or more parameters correlated to physical properties of a target object to be typed, particularly the spatial organization of individual scatterers forming such object.

Some scientific works have considered the possibility to extract structural information from the phase signal by considering its statistical distribution. See for example L. Weng, J. M. Reid, P. M. Shankar, K. Soetanto, X. M. Lu "Nonuniform phase distribution in speckle analysis — Part I: Background and experimental demonstration," IEEE Trans. Ultrason., Ferroelect., Freq. Contr., vol. 39, no. 3, pp. 352-358, May 1992, L. Weng, J. M. Reid, P. M. Shankar, K. Soetanto, X. M. Lu "Nonuniform phase distribution in speckle analysis - Part II: Parametric Expression and a Frequency Sweeping Technique to Measure Mean Scatterer Spacing," IEEE Trans. Ultrason., Ferroelect., Freq. Contr., vol. 39, no. 3, pp. 360-365, May 1992, V. M. Narayanan, R. C. Molthen, P. M. Shankar, L. Vergara, J. M. Reid, "Studies on Ultrasonic Scattering from Quasi-Periodic Structures," IEEE Trans. Ultrason., Ferroelect., Freq. Contr., vol. 44, no. 1, pp. 114-124, May 1992.

Particularly, in the two papers by Weng et al., the magnitude and the phase of the received signal are jointly employed to reveal the estimated complex vector distribution which is proved to be circle-arranged (i.e. uniform distribution for phase and Rayleigh distribution for magnitude) in case of random arrangements of scatterers whereas it assumes a different shape in case of a more organized scatterer pattern. Conversely, the paper by Narayanan et al. shows how the autocorrelation of the revealed complex signal in the spectral domain can be used to establish if the scatterers are arranged in a random or in a quasi-periodic manner. However, such prior art methods have been proved to be not so much powerful being restricted to a very particular case of discrimination involving the full complex received echo and thus both magnitude and phase extraction.

The object of the present invention is therefore to provide an effective, simple and reliable method for typing an object or an area of interest by exploiting the characteristics of a signal generated by structures and/or interfaces in response to a generic radiation, particularly an ultrasonic wave, interacting with such object or region.

This and further objects and advantages, which the following text will make clear to those skilled in the art, are achieved essentially by means of a method for determining the structural organization of a target object as defined by claim 1.

The present invention is essentially based on the fact that the inventor demonstrated with mathematical calculations, which will be shown in greater details below, that discontinuities in the phase signal can be somehow related to the spatial organization, particularly to the mutual distance between reflectors. Hence by properly detecting such discontinuities a map of the organization of the structure can be depicted.

Advantageously the method further comprises the step of applying one or more statistic operators, such as the statistical moment or moments of the first derivative of the phase of the received signal or signals (e.g. mean, variance, skewness or kurtosis), to obtain a detection signal. In this case the spatial distribution of structures and/or interfaces of the object are determined by detecting the discontinuities in such detection signal. In this way the influence of spurious terms in the phase not directly related to delays, and thus to the position of the scatterers, is reduced. This aspect will be explained in details below.

To easily detect discontinuities in the phase or detection signal, the method may comprise the step of calculating the derivative of such phase signal and/or detection signal. A discontinuity in a function corresponds to a spike in the derivative which is better detected for example using thresholds.

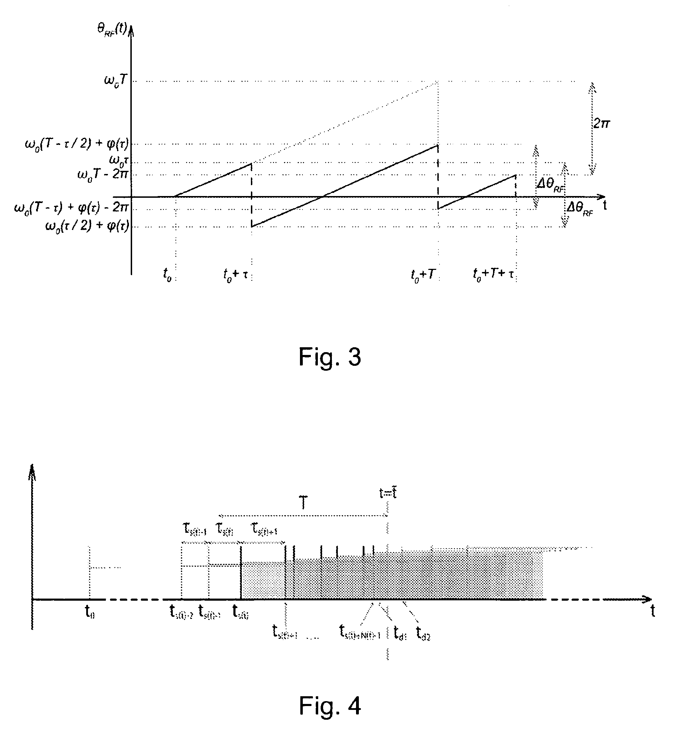

According to the invention, structures and/or interfaces of the target object are identified by detecting couples of discontinuities located at a temporal distance determined as a function of a parameter of the transmission signal, particularly the length of a transmitting burst. As shown in Fig. 3, which will be discussed in details below, for the simplified case of only two scatterers placed at the temporal instants $t_0$ and $t_0+\tau$, if the burst length is T, discontinuities in the received phase signal are located at $t_0$, $t_0+\tau$, $t_0+T$ and $t_0+T+\tau$. This finding can be extended, with some limitations, also to complex cases and represents the core of the invention. The term burst having length T in the present invention is to be interpreted broadly to comprise a signal formed by a single pulse or more pulses or cycle or cycles of sinusoids or of any type of functions in the time interval T.

According to a preferred embodiment, more bursts having different length $T_i$ are transmitted. In this case structures and/or interfaces are identified by detecting couples of discontinuities located at the temporal distance $T_i$ corresponding to the length of the transmitted burst. This can be implemented, for example, with the following steps:

a) transmitting a burst signal having length $T_i$;
b) extracting the phase signal and/or detection signal from the received signal;
c) detecting discontinuities in such phase signal and/or detection signal;
d) for each detected discontinuity, verifying if a corresponding discontinuity exists at the temporal distance $T_i$;
e) associating such couple of detected discontinuities to a structure and/or interface;
f) transmitting a burst having different length $T_j$ to verify if the remaining uncoupled discontinuities have corresponding discontinuities at the temporal distance $T_j$;
g) associating such couple of detected discontinuities to a structure and/or interface;
h) if uncoupled discontinuities still exist, repeating step f) for a predefined maximum number n of iterations whereby at each iteration the length of the transmitted burst is varied.

In complex structure it may happen that some discontinuities are cancelled due to the presence of other interfering scatterers. For this reason by using multiple firings with different burst lengths such fakes can be advantageously detected.

To improve the sensitivity of the received signal, in a preferred embodiment, the derivative signal of the phase signal and/or of the detection signal is calculated and combined with a replica of the same derivative signal time shifted by the length of the transmitting burst. The modulus of such quantities is advantageously calculated and added to obtain an enhanced effect. The resulting signal is thus used for determining discontinuities in the phase signal and/or detection signal. Obviously the summation of replica time shifted can also be made on the phase signal before calculating the derivative or without calculating the derivative at all.

As phase jumps in the detected discontinuities are somehow related to the distance between scatterers, a parameter related to the concentration of scatterers and/or mean distance between scatterers in the target object can also be determined.

Preferably the information on detected pairs of discontinuities, particularly their temporal position, is transformed into an image data, i.e. image pixels or voxels, of the target object which can be superimposed on an image of the object obtained with the same or, preferably, a different modality, for example by varying the opacity of the images. Alternatively or in combination such information can be used for filtering images from unwanted background noise such as the speckle typical of coherent acquisition systems.

As the phase signal is more correlated to the spatial organization of scatterers than the amplitude signal as it will be see below, robust feature tracking algorithms can be devised for example by tracking discontinuities in the phase signal. Feature tracking is an important aspect, for example, for non-Doppler velocity estimation methods and for some elastography techniques.

The invention also relates to an echography device comprising an echography probe and means of acquiring and processing a return signal from an organ subjected to echographic examination, wherein said acquisition and processing means are programmed to implement a method as specified above.

Further improvements of the invention will form the subject of the dependent claims.

The characteristics of the invention and the advantages derived therefrom will be more apparent from the following description of non-limiting embodiments, illustrated in the annexed drawings.

Fig. 1 and Fig. 2 respectively show the value of the absolute and wrapped phase discontinuity in the points $t = t_0 + \tau$ and $t = t_0 + T$ with respect to the time lag between the backscattered echoes in the case of two backscattering particles respectively located in $t_0$ and $t_0 + \tau$ with a burst length T.

Fig. 3 shows the RF phase function of the received signal backscattered by two scatterers of the preceding figures.

Fig. 4 shows a schematic representation of a generic sequence of scatterers lying on a line of sight. The respective backscattered bursts are shown as rectangles. At the time instant $t = \bar{t}$, the $N(\bar{t})$ scatterers interfering in this point are those falling inside the preceding time interval T (black bars are located in the time position of scatterers generating bursts represented as gray rectangles). The immediately previous and immediately successive discontinuities of the phase function are located respectively in the time instants $t_{d1}$ and $t_{d2}$.

Fig. 5 illustrates a simple sketch of a distribution of scatterers over a region of interest inspected by an ultrasonic beam. All the scatterers within the radiation lobe contribute to the phase signal relative to the line of sight which is the axis of the lobe. The time position of each scatterer is proportional to the distance from the transducer.

Fig. 6 shows the spectrum of two different backscattered signal obtained by insonifying a simulated test-object composed by two interfering scatterers having variable distance.

Fig. 7 shows the output of a reconstruction algorithm according to the invention respectively for sequence of scatterers spaced of 4 (a), 8 (b), 16 (c) and 32 (d) samples.

Fig. 8 shows the dependence of the phase signal with respect to the scatterer displacement.

Fig. 9 shows the statistical moments $E[\Psi]$ (a) and $E[(\Psi—E[\Psi])^2]$ (b) of the instantaneous frequency, i.e. the time first derivative of the phase signal, computed in a small region at different distances z from the probe with respect to dispersion concentration of alumina powder.

Fig. 10 shows two different portions of the output trace of the reconstruction algorithm according to the invention based on the instantaneous frequency.

First of all, some general issues about the considered quantities are reported. Considering a received RF signal $x(t)$ , the result of a coherent demodulation are the in-phase and phase-quadrature components which can be denoted as $x_i$ $(t)$ and $x_q(t)$ respectively. Defining $\hat{x}(t)$ the Hilbert transform of the received signal, we have:

$$\begin{cases} x_i(t) = x(t) \cdot \cos(\omega_0 t) + \hat{x}(t) \cdot \sin(\omega_0 t) \\ x_q(t) = -x(t) \cdot \sin(\omega_0 t) + \hat{x}(t) \cdot \cos(\omega_0 t) \end{cases} \qquad (1)$$

where $\omega_0$ is the demodulation carrier pulsation. A general expression for the received RF signal, in terms of the phasor $P(t) = a(t) \cdot e^{\omega_0 t + \theta(t)}$ where the signal $a(t)$ is the baseband envelope and $\theta(t)$ is the baseband phase, can be given as

$$x(t) = \text{Re}\{P(t)\} = a(t) \cdot \text{Re}\{e^{\omega_0 t + \theta(t)}\} = a(t) \cdot \cos(\omega_0 t + \theta(t)) = a(t) \cdot \cos\left(\omega_0 t + tg^{-1}\left(\frac{x_q(t)}{x_i(t)}\right)\right) \qquad (2)$$

and therefore using expressions (1) and a basic property of the arctangent function

$$\vartheta(t) = tg^{-1}\left(\frac{-x(t) \cdot \sin(\omega_0 t) + \hat{x}(t) \cdot \cos(\omega_0 t)}{x(t) \cdot \cos(\omega_0 t) + \hat{x}(t) \cdot \sin(\omega_0 t)}\right) = tg^{-1}\left(\frac{\hat{x}(t)}{x(t)}\right) - \omega_0 t. \qquad (3)$$

The last expression underlines the relation between the base-band phase signal $\vartheta(t)$ and the RF phase term $\vartheta_{RF}(t) = tg^{-1}$ $(\hat{x}(t)/x(t))$. In particular, these two quantities carry the same information apart a linearly varying phase term dependent on the demodulation pulsation. All the information regarding the interaction of multiple backscattered pulses is therefore contained in the baseband phase term $\vartheta(t)$ . However, equation (3) permits also to retrieve one phase term by the other one depending on which signals couple is available, the RF signals $\hat{x}(t)$, $x(t)$ or the baseband signals $x_q(t), x_i(t)$.

Further consideration can be extrapolated by the first derivative of the baseband signal phase $\vartheta(t)$ which represent the *instantaneous frequency* of the received signal. By means of equation (3), it is possible to derive the expression of $\dot{\vartheta}(t)$ with respect to the RF signals $\hat{x}(t), x(t),$

$$\dot{\vartheta}(t) = \frac{\dot{\hat{x}}(t) \cdot x(t) - \hat{x}(t) \cdot \dot{x}(t)}{x(t)^2 + \hat{x}(t)^2} - \omega_0 = \frac{\frac{\partial}{\partial t}\left(\hat{x}(t) \cdot x(t)\right)}{x(t)^2 + \hat{x}(t)^2} - \omega_0 = 2 \cdot \pi \cdot f_{RF}(t) - \omega_0. \qquad (4)$$

The previous relation demonstrates that the RF instantaneous frequency $f_{RF}(t)$ and $\vartheta(t)$ are related by a linear combination with constant values and therefore the interference information can be revealed from either these quantities. Furthermore, the invariance of the time varying term with respect to a scalar multiplication factor is evinced by the normalization of the denominator which is the square modulus of the phasor. Hence for the purpose of the present invention, the phase of the received signal can be equally extracted either directly from the RF signal or from the demodulated baseband signal. In the following some cases are considered in order to describe how phase signal varies with respect to the kind of beams interference. The first four cases are assumed in the simplest context. In particular, the acquired signal are backscattered by a medium not affected by frequency dependent attenuation and the considered acquisition system has infinite lateral resolution as well as infinite bandwidth. Conversely, in the last two cases, more realistic hypothesis are adopted and some conclusion on the real context will be drawn.

Case a

Let's consider a test object composed by a homogeneous not attenuating substance (water) and a single particle whose dimensions are comparable to the transmitted wavelength such as to behave as a point-like scatterer. Let the transmitted burst $y(t)$ be a rectangular windowed sinusoid having generic time extent T and pulsation $\omega_0$, i.e.

$$y(t) = \sin(\omega_0 t) \cdot [u(t) - u(t - T)]$$

where u(t) is the unitary step function. For the sake of simplicity, it is assumed that the burst is formed by an integer number of cycles $N_c$ and therefore $T = N_c / f_0 = 2\pi N_c / \omega_0$. The propagation through the introduced ideal medium can be described as a multiplication by an unitary complex exponential whose argument is dependent on the propagation speed c and the distance between the scatterer and the probe D, leading to

$$x(t) = \sin\left(\omega_0\left(t - \frac{2 \cdot D}{c}\right)\right) \cdot \left[u\left(t - \frac{2 \cdot D}{c}\right) - u\left(t - T - \frac{2 \cdot D}{c}\right)\right] \tag{5}$$

that represent a simple time delayed version of the transmitted signal $y(t)$ centred in $t_0 = \dfrac{2 \cdot D}{c}$.

It can be easily demonstrated that the instantaneous phase of the RF signal assumes the following expression

$$\vartheta_{RF}(t) = \begin{cases} 0 & t < t_0 \\ \dfrac{1}{2\pi} \cdot \omega_0 \cdot (t - t_0), & t \in [t_0, t_0 + T) \\ \dfrac{1}{2\pi} \cdot \omega_0 \cdot T & t \geq t_0 + T \end{cases} \tag{6}$$

which identifies a $C^0$ function having null slope outside the interval $[t_0, t_0 + T]$ and represented by a linear ramp with slope $\dfrac{1}{2\pi} \cdot \omega_0$ $\omega_0$ inside the same interval. Consequently, the RF instantaneous frequency results in a not continuous function that can be obtained from equation (6) by derivation

$$\dot{\vartheta}_{RF}(t) = \begin{cases} 0 & t < t_0 \\ \dfrac{1}{2\pi} \cdot \omega_0, & t_0 \leq t < t_0 + T \\ 0 & t \geq t_0 + T \end{cases} \tag{7}$$

Case b

Similar consideration can be expressed by adding to the previous test case one scatterer whose distance from the probe is $D + d$ being $\tau = 2 \cdot d/c$ the additional time shift between the two backscattered echoes. In order to consider what happens when two backscattered bursts interfere, the time shift $\tau$ should be lower than the burst extension $T$, otherwise the two scatterers behave separately as described previously. For sake of simplicity, let's assume, that both these scatterers are aligned on the transmitting and receiving probe axis. Considering the same transmitted pulse of the previous case $y(t)$, the received signal can be expressed as

$$x(t) = \sin\left(\omega_0\left(t - t_0\right)\right) \cdot \left[u\left(t - t_0\right) - u\left(t - T - t_0\right)\right] + \\ \sin\left(\omega_0\left(t - \tau - t_0\right)\right) \cdot \left[u\left(t - \tau - t_0\right) - u\left(t - T - \tau - t_0\right)\right] \tag{8}$$

The received signal $x(t)$ is thus a $C^0$ function whose expression varies along different intervals as follows

$$x(t) = \begin{cases} \sin(\omega_0(t - t_0)), & t_0 < t < t_0 + \tau & (a) \\ \sin(\omega_0(t - t_0)) + \sin(\omega_0(t - t_0 - \tau)), & t_0 + \tau \le t < t_0 + T & (b) \\ \sin(\omega_0(t - t_0 - \tau)), & t_0 + T \le t < t_0 + T + \tau & (c) \\ 0 & \textit{otherwise} & (d). \end{cases} \tag{9}$$

By using the prosthaphaeresis formulas, expression (9) can be written as

$$x(t) = 2 \cdot \cos(\frac{\omega_0}{2}\tau) \cdot \sin(\omega_0(t - t_0 - \frac{\tau}{2})), \quad t_0 + \tau \le t < t_0 + T \tag{10}$$

Now, considering the operator $\angle$ which extract the phase term in the time domain, the time phase function of the RF signal $\angle x(t)$ assumes the following expression

$$\angle x(t) = \vartheta_{RF}(t) = \begin{cases} 0, & t \le t_0 & (a) \\ \omega_0(t - t_0) + i \cdot 2\pi, & t_0 < t < t_0 + \tau & (b) \\ \omega_0(t - t_0 - \frac{\tau}{2}) + \varphi(\tau) + j \cdot 2\pi, & t_0 + \tau \le t < t_0 + T & (c) \\ \omega_0(t - t_0 - \tau) + k \cdot 2\pi, & t_0 + T \le t < t_0 + T + \tau & (d) \\ 0, & t > t_0 + T + \tau & (e) \end{cases} \tag{11}$$

where $i, j, k$ are integer constant whose values minimize the phase jump values and where the function $\varphi(\tau)$ is the time independent phase term due to the multiplicative factor $\cos(\frac{\omega_0}{2}\tau)$ in equation (10) that can assume only values 0 and $\pi$. The following is one possible way to express such quantity:

$$\varphi(\tau) = \frac{\pi}{2} \cdot \left[ sign(\cos(\omega_0 \frac{\tau}{2})) - 1 \right], \quad -\frac{T}{2} < \tau \le \frac{T}{2}, \tag{12}$$

being the *sign* function equal to one where the argument is positive and null where the argument is negative. The existence interval of the function $\varphi(\tau)$ is $\left[ -\frac{T}{2} ; \frac{T}{2} \right]$ recalling that, for values of $\tau$ outside this interval, the two backscattered pulses do not mutually interfere. This consideration permits to state that, in this case, the phase is a not continuous function both for $t = t_0 + \tau$ and for $t = t_0 + T$ corresponding respectively to the time instants when the second burst starts to be received and to the time instant when the first burst terminate to be received. This phase jump can be obtained as difference of the left and right limits of the phase function, i.e.

$$\Delta \vartheta_{RF}(t_0 + \tau) = \lim_{\tilde{t} \to (t_0+\tau)^+} \vartheta_{RF}(\hat{t}) - \lim_{\tilde{t} \to (t_0+\tau)^-} \vartheta_{RF}(\breve{t}) = -\omega_0 \frac{\tau}{2} + \varphi(\tau), \tag{13}$$

$$\Delta \vartheta_{RF}(t_0 + T) = \lim_{\tilde{t} \to (t_0+T)^+} \vartheta_{RF}(\hat{t}) - \lim_{\tilde{t} \to (t_0+T)^-} \vartheta_{RF}(\breve{t}) = -\omega_0 \frac{\tau}{2} - \varphi(\tau). \tag{14}$$

The previous relations demonstrate that the value of the phase jumps are functions of the transmission pulsation $\omega_0$ and time shift $\tau$. Therefore, in this particular case, given the pulsation $\omega_0$, the entity of the phase discontinuities can be related to the time shift between the backscattered interfering bursts and thus to the distance between the scatterers generating the echoes. Moreover, since the cosine is an even function, $\varphi(\tau)=-\varphi(\tau)$ and therefore

$$\Delta \vartheta_{RF} = \Delta \vartheta_{RF}(t_0 + \tau) = \Delta \vartheta_{RF}(t_0 + T) = -\omega_0 \frac{\tau}{2} + \varphi(\tau). \tag{15}$$

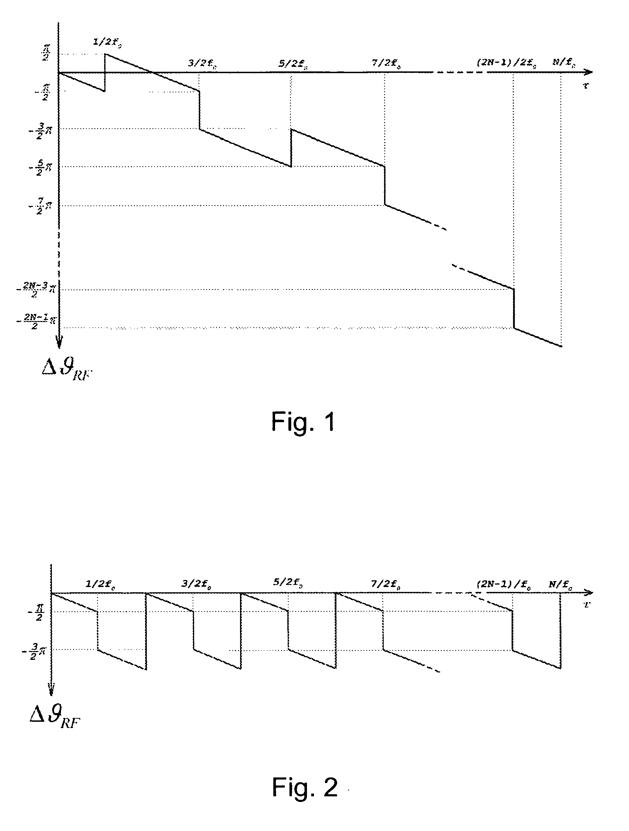

Fig. 1 and Fig. 2. show the absolute and wrapped phase jump as reported in the expression derived above.

A first direct consequence of such behaviour of the functions $\Delta \vartheta_{RF}(t_0 + \tau)$ and $\Delta \vartheta_{RF}(t_0 + T)$ is that the amplitude of the phase discontinuity cannot be related directly to the time lag $\tau$ since the functions are not monotone. Moreover, considering that only wrapped phase discontinuities can be revealed, the phase jump varies with a periodicity of one cycle as the time distance between the two scatterers increases.

Another interesting consideration can be done discussing the expression of the $\vartheta_{RF}$ as a function of time. Fig. 3 shows an example of this function for the considered case with two scatterers.

The phase discontinuities $\Delta \vartheta_{RF}$ derived above are located in $t = t_0 + \tau$ where the backscattered burst of the second scatterer starts and in $t = t_0 + T$ where the backscattered burst of the first scatterer terminates. In other words, the function $\vartheta_{RF}(t)$ is simply not derivable in the starting point of the first burst and the ending point of the second one, which are respectively $t = t_0$ and $t = t_0 + T + \tau$. Therefore, even if the phase jumps $\Delta \vartheta_{RF}$ can assume a different value depending on the time distance $\tau$, the function $\vartheta_{RF}(t)$ departs by the linear behaviour $\omega_0(t-t_0)$ only at the extremities of the interfering bursts.

Case c

In this paragraph it is considered the case of multiple scatterers having different echogenicity and spaced with variable distance in order to evaluate the phase function with multiple interfering bursts, assuming that all the considered scatterers are lying along the line of sight currently inspected. Furthermore, let's consider that the first one is located in $t = t_0$ and the following ones to be positioned having a generic distance $\tau_i$ between each other, i.e. $\tau_i = t_i - t_{i-1}$ if i > 1 and

$\tau_0 = 0$. In Fig. 4 is evidenced with black bars, the generic sequence of $N(\bar{t})$ scatterers interfering at a given depth relative the time instant $t = \bar{t}$. Indicating with $s(\bar{t})$ the index of the scatterer which generates the first interfering burst in $t = \bar{t}$, the received RF signal can be expressed as

$$x(\bar{t}) = \sum_{i=0}^{N(\bar{t})-1} a_i \cdot \sin\left(\omega_0\left(\bar{t} - t_0 - \sum_{j=1}^{s(\bar{t})-1}\tau_j - \sum_{k=0}^{i}\tau_{s(t)+k}\right)\right), \qquad \bar{t} \in (t_{d1}, t_{d2}), \tag{16}$$

being $t_{d1}$ and $t_{d2}$ the time instant of the immediately previous and immediately successive discontinuities with respect to $t = \bar{t}$ respectively, due either to a new burst beginning or to a burst termination. Therefore the expressions of such time instants are:

$$\begin{cases} t_{d1} &= \max(t_{s(\bar{t})-1} + T, \quad t_{s(\bar{t})+N(\bar{t})-1}), \\ t_{d2} &= \min(t_{s(\bar{t})} + T, \quad t_{s(\bar{t})+N(\bar{t})}). \end{cases}$$

The values assumed by $t_{d1}$ and $t_{d2}$ can be proved to be $t_{d1} < \bar{t} < t_{d2}$ by using the definitions of $s(\bar{t})$, $N(\bar{t}), T$. As demonstrated in Appendix A, (16) can be expressed as

$$\begin{aligned}
x(\bar{t}) &= a_{0,N(\bar{t})-1} \cdot \sin\left(\omega_0\left(\bar{t} - t_0 - \sum_{j=1}^{s(\bar{t})}\tau_j - \sum_{k=1}^{N(\bar{t})-1}\frac{2^{N(\bar{t})-k}-1}{2^{N(\bar{t})-k}}\tau_{s(\bar{t})+k} + \sum_{k=1}^{N(\bar{t})-2}\frac{\tau_{0,k}}{2^{N(\bar{t})-1-k}} + \tau_{0,N(\bar{t})-1}\right)\right) = \\
&= \sqrt{a_{0,N(\bar{t})-2}^2 + a_{N(\bar{t})-1}^2 + 2a_{0,N(\bar{t})-2}a_{N(\bar{t})-1} \cdot \cos\left(\omega_0\left(\sum_{k=1}^{N(\bar{t})-2}\frac{\tau_{0,k}}{2^{N(\bar{t})-2-k}} + \sum_{k=1}^{N(\bar{t})-1}\frac{\tau_{s(\bar{t})+k}}{2^{N(\bar{t})-1-k}}\right)\right)} \cdot \\
&\quad \sin\left(\omega_0\left(\bar{t} - t_0 - \sum_{j=1}^{s(\bar{t})}\tau_j - \sum_{k=1}^{N(\bar{t})-1}\frac{2^{N(\bar{t})-k}-1}{2^{N(\bar{t})-k}}\tau_{s(\bar{t})+k} + \sum_{k=1}^{N(\bar{t})-1}\frac{\tau_{0,k}}{2^{N(\bar{t})-1-k}}\right)\right) = \\
&= \sqrt{a_{0,N(\bar{t})-2}^2 + a_{N(\bar{t})-1}^2 + 2a_{0,N(\bar{t})-2}a_{N(\bar{t})-1} \cdot \cos\left(\omega_0\left(\sum_{k=1}^{N(\bar{t})-2}\frac{\tau_{0,k}}{2^{N(\bar{t})-2-k}} + \sum_{k=1}^{N(\bar{t})-1}\frac{\tau_{s(\bar{t})+k}}{2^{N(\bar{t})-1-k}}\right)\right)} \cdot \\
&\quad \sin\left(\omega_0\left(\bar{t} - t_0 - \sum_{j=1}^{s(\bar{t})+N(\bar{t})-1}\tau_j + \sum_{k=1}^{N(\bar{t})-1}\frac{\tau_{s(\bar{t})+k}}{2^{N(\bar{t})-k}} + \sum_{k=1}^{N(\bar{t})-1}\frac{\tau_{0,k}}{2^{N(\bar{t})-1-k}}\right)\right),
\end{aligned} \tag{17}$$

where the generic parameters $a_{0,i}$ and $\tau_{0,i}$ can be defined iteratively as

$$\begin{cases}
a_{0,i} = \sqrt{a_{0,i-1}^2 + a_i^2 + 2a_{0,i-1}a_i \cdot \cos\left(\omega_0\left(\sum_{j=1}^{i-1}\frac{\tau_{0,j}}{2^{i-1-j}} + \sum_{j=1}^{i}\frac{\tau_{s(\bar{t})+j}}{2^{i-j}}\right)\right)}, \\
\tau_{0,i} = \tan^{-1}\left(\frac{a_{0,i-1} - a_i}{a_{0,i-1} + a_i} \cdot \tan\left(\frac{\omega_0}{2}\left(\sum_{j=1}^{i-1}\frac{\tau_{0,j}}{2^{i-1-j}} + \sum_{j=1}^{i}\frac{\tau_{s(\bar{t})+j}}{2^{i-j}}\right)\right)\right),
\end{cases} \tag{18}$$

being $a_{0,0} = a_0$.

The previous expression evidences that both the amplitude coefficients $a_k$ and the delays $\tau_{s(t)+j}$ are involved in the expression of the amplitude and the phase of the derived sine term. However, while the cross-dependence of the amplitude term with respect to the scatterers delays is direct as evidenced by the cosine argument in expression (17), the additional phase term has a dependence by the backscattered bursts amplitudes only through the parameters $\tau_{0,i}$. Moreover, as shown by the expression of $\tau_{0,i}$ in (18), the values assumed by those parameters belong to the interval

$\left[ -\dfrac{\pi}{2}, \dfrac{\pi}{2} \right]$ being the result of the arctan function.

Another important consideration can be done on relations (17) and (18). Whatever it is the value assumed by each of the amplitude terms as well as the cosine argument in the expression of $a_{0,i}$, it can be easily demonstrated that this expression results in a non-negative value as expected by the amplitude terms. Therefore, no indications about the sign of the parameters $a_i$ of each backscattered signal is given through this parameter. Conversely, the additional time shift term is a signed term due to both the bursts amplitudes and the tangent arguments. Another important aspect related to the expression of $\tau_{0,i}$ is the highly irregular values assumed due to the high slope, non-linear, tangent function as well as due to the possibility that the amplitude term results in a denominator which tends to zero in case of $a_i \to$

$-a_{0,i-1}$. However, the arctan function maps this potentially very large values into the finite interval $\left[ -\dfrac{\pi}{2}, \dfrac{\pi}{2} \right]$, as

already discussed. In the light of these considerations, it is possible to identify the term $\displaystyle\sum_{j=1}^{i-1} \dfrac{\tau_{0,j}}{2^{i-1-j}}$ to be the main responsible of the speckle pattern in amplitude images of homogeneous areas with high concentration of scatterers. Indeed, as evidenced by the expression of $a_{0,i}$, if this term is removed, the cosine modulating the mixed amplitude terms would be much more regular since the term $\displaystyle\sum_{j=1}^{i} \dfrac{\tau_{s(\bar{i})+j}}{2^{i-j}}$ induces a very limited variation with respect to the scatterer distribution being a weighted mean of the distances between scatterers. Therefore, in conditions of perfectly developed speckle, the main contribution to the speckle noise pattern is given by the randomly varying cosine argument of the amplitude coefficient $a_{0,N(\bar{t})-1}$.

On the basis of equation (17), it is possible to express the RF phase function as

$$\vartheta_{RF}(\bar{t}) = \omega_0 \left( \bar{t} - t_0 - \sum_{j=1}^{s(\bar{i})+N(\bar{i})-1} \tau_j + \sum_{k=1}^{N(\bar{i})-1} \frac{\tau_{s(\bar{i})+k}}{2^{N(\bar{i})-k}} + \sum_{k=1}^{N(\bar{i})-1} \frac{\tau_{0,k}}{2^{N(\bar{i})-1-k}} \right) = \omega_0 \left( \bar{t} - t_{s(\bar{i})+N(\bar{i})-1} + \sum_{k=1}^{N(\bar{i})-1} \frac{\tau_{s(\bar{i})+k}}{2^{N(\bar{i})-k}} + \sum_{k=1}^{N(\bar{i})-1} \frac{\tau_{0,k}}{2^{N(\bar{i})-1-k}} \right) =$$

$$= \omega_0 \left( \bar{t} - t_{s(\bar{i})+N(\bar{i})-1} \right) + \omega_0 \sum_{k=1}^{N(\bar{i})-1} \frac{\tau_{s(\bar{i})+k}}{2^{N(\bar{i})-k}} + \omega_0 \sum_{k=1}^{N(\bar{i})-1} \frac{\tau_{0,k}}{2^{N(\bar{i})-1-k}}. \tag{19}$$

This expression reveals that the RF phase function in the interval $(t_{d1}, t_{d2})$ is constituted by three terms. The first one is the time varying term which is nothing but a ramp function, having slope $\omega_0$, starting in the time instant where the last interfering burst begins. The second term and third term, instead, are time-independent and represent biases whose values are relative to the mutual organization of the scatterers which are interfering for any $\bar{t} \in (t_{d1}, t_{d2})$. In particular, the second term is influenced only by the time delays between the $N(\bar{t})$ interfering bursts, whereas the third one is dependent on both the time organization and the echogenicity of the scatterers backscattering these burst as demonstrated by the expression (18).

A direct comparison between (19) and (11) can be done since both expression have a ramp term with slope $\omega_0$ and time-independent terms that are related to the mutual time distances between the interfering bursts. Moreover, equation (17) is a generalization of equation (10) assuming $N(\bar{t}) = 2$ and performing some simple algebra operation as shown in Appendix B. Consequently, also equation (19) results a generalization of equation (11).

Now, it is possible to derive the expression of the phase jump in rightmost limit of the considered interval, which is $t = t_{d2}$. Since, the function $\vartheta_{RF}(t)$ is generally not continuous for $t = t_{d2}$, the phase jump has still to be defined as right and left limits difference. In order to proceed, it is necessary to consider three different cases related to the reason causing such discontinuity. The first one is related to the termination of the first interfering burst, which is the burst

originating in $t = t_{s(\bar{i})}$. In order to evaluate the phase jump in this condition, we have to derive the expression of $\vartheta_{RF}\left( \widehat{\bar{t}} \cdot \right)$

which is the phase term of the received signal when the reference interval is the successive, and thus for $\hat{t} \in (t_{d2}, t_{d3})$. This can be done, both by following the same development for the current interval or using the expression (19) where it has been assumed that $s(\hat{t}) = s(\bar{t}) + 1$, $N(\hat{t}) = N(\bar{t}) - 1$ and therefore

$$
\begin{aligned}
\Delta \vartheta_{RF}(t_{d2}) &= \lim_{\bar{t} \to t_{d2}^+} \vartheta_{RF}(\hat{t}) - \lim_{\bar{t} \to t_{d2}^-} \vartheta_{RF}(\bar{t}) = \\
&= \omega_0 \left( t_{d2} - t_{s(\bar{t})+N(\bar{t})-1} \right) + \omega_0 \sum_{k=1}^{N(\bar{t})-2} \frac{\tau_{s(\bar{t})+k+1}}{2^{N(\bar{t})-k-1}} + \omega_0 \sum_{k=1}^{N(\bar{t})-2} \frac{\tau_{1,k+1}}{2^{N(\bar{t})-2-k}} + \\
&\quad - \omega_0 \left( t_{d2} - t_{s(\bar{t})+N(\bar{t})-1} \right) - \omega_0 \sum_{k=1}^{N(\bar{t})-1} \frac{\tau_{s(\bar{t})+k}}{2^{N(\bar{t})-k}} - \omega_0 \sum_{k=1}^{N(\bar{t})-1} \frac{\tau_{0,k}}{2^{N(\bar{t})-1-k}} = \\
&= \omega_0 \left( -\frac{\tau_{s(\bar{t})+1}}{2^{N(\bar{t})-1}} \right) + \omega_0 \left( \sum_{k=1}^{N(\bar{t})-2} \frac{2\tau_{1,k+1} - \tau_{0,k}}{2^{N(\bar{t})-1-k}} - \tau_{0,N(\bar{t})-1} \right) = \\
&= \omega_0 \left( -\frac{\tau_{s(\bar{t})+1}}{2^{N(\bar{t})-1}} \right) + \omega_0 \left( \sum_{k=1}^{N(\bar{t})-1} \frac{2\tau_{1,k+1} - \tau_{0,k}}{2^{N(\bar{t})-1-k}} - \tau_{1,N(\bar{t})} \right).
\end{aligned}
\tag{20}
$$

A different expression can be obtained in a second case which is related to the presence of a new scatterer in $t = t_{d2}$ causing a different discontinuity in the phase function. In particular, in this case $s(\hat{t}) = s(\bar{t})$, $N(\hat{t}) = N(\bar{t}) + 1$ and therefore

$$
\begin{aligned}
\Delta \vartheta_{RF}(t_{d2}) &= \lim_{\bar{t} \to t_{d2}^+} \vartheta_{RF}(\hat{t}) - \lim_{\bar{t} \to t_{d2}^-} \vartheta_{RF}(\bar{t}) = \\
&= \omega_0 \left( t_{d2} - t_{s(\bar{t})+N(\bar{t})} \right) + \omega_0 \sum_{k=1}^{N(\bar{t})} \frac{\tau_{s(\bar{t})+k}}{2^{N(\bar{t})-k+1}} + \omega_0 \sum_{k=1}^{N(\bar{t})} \frac{\tau_{0,k}}{2^{N(\bar{t})-k}} + \\
&\quad - \omega_0 \left( t_{d2} - t_{s(\bar{t})+N(\bar{t})-1} \right) - \omega_0 \sum_{k=1}^{N(\bar{t})-1} \frac{\tau_{s(\bar{t})+k}}{2^{N(\bar{t})-k}} - \omega_0 \sum_{k=1}^{N(\bar{t})-1} \frac{\tau_{0,k}}{2^{N(\bar{t})-1-k}} = \\
&= \omega_0 \left( -\frac{1}{2} \tau_{s(\bar{t})+N(\bar{t})} - \sum_{k=1}^{N(\bar{t})-1} \frac{\tau_{s(\bar{t})+k}}{2^{N(\bar{t})-k+1}} \right) + \omega_0 \left( \tau_{0,N(\bar{t})} - \sum_{k=1}^{N(\bar{t})-1} \frac{\tau_{0,k}}{2^{N(\bar{t})-k}} \right).
\end{aligned}
\tag{21}
$$

Now, the third and last case is considered which is related to the coincidence of the two previous cases. In particular, in this situation, it is taken into account the possibility that in $t = t_{d2}$ the first interfering burst terminates and also another burst starts for the presence of a scatterer in the same time instant. If this is the case, $s(\hat{t}) = s(\bar{t}) + 1$, $N(\hat{t}) = N(\bar{t})$,

$$
\begin{aligned}
\Delta \vartheta_{RF}(t_{d2}) &= \omega_0 \left( t_{d2} - t_{s(\bar{t})+N(\bar{t})} \right) + \omega_0 \sum_{k=2}^{N(\bar{t})-1} \frac{\tau_{s(\bar{t})+k+1}}{2^{N(\bar{t})-k}} + \omega_0 \sum_{k=1}^{N(\bar{t})-1} \frac{\tau_{1,k+1}}{2^{N(\bar{t})-k-1}} + \\
&\quad - \omega_0 \left( t_{d2} - t_{s(\bar{t})+N(\bar{t})-1} \right) - \omega_0 \sum_{k=1}^{N(\bar{t})-1} \frac{\tau_{s(\bar{t})+k}}{2^{N(\bar{t})-k}} - \omega_0 \sum_{k=1}^{N(\bar{t})-1} \frac{\tau_{0,k}}{2^{N(\bar{t})-1-k}} = \\
&= \omega_0 \left( -\frac{\tau_{s(\bar{t})+1}}{2^{N(\bar{t})-1}} - \sum_{k=2}^{N(\bar{t})} \frac{\tau_{s(\bar{t})+k}}{2^{N(\bar{t})-k+1}} \right) + \omega_0 \left( \sum_{k=1}^{N(\bar{t})-1} \frac{\tau_{1,k+1} - \tau_{0,k}}{2^{N(\bar{t})-k-1}} \right).
\end{aligned}
\tag{22}
$$

Even if the quantity $\Delta \vartheta_{RF}(t_{d2})$ assumes a different value in these three cases, all the three expressions do not contain a dependence on the time instant where the discontinuity occurs $t_{d2}$, but only on the time organization and on the echogenicity of the scatterers generating the interfering bursts.

An interesting property of the phase signal jumps is demonstrated in Appendix C. In particular it is shown that, in case of two successive discontinuities generated for a burst termination and a burst beginning, either in this order or in the opposite one, the total phase jump is equal to the value of a single discontinuity due to both events occurring simultaneously, that is the phase jump reported in expression (22).

<u>Case d</u>

Now let's consider the more particular case of a series of equally spaced scatterers along the line of sight with same echogenicity. As demonstrated above, the RF phase signal $\vartheta_{RF}(t)$ is a ramp signal having discontinuities in the time instants relative to both the beginning and the termination of each backscattered burst. Therefore, in case of equally spaced scatterers, two series of equally spaced discontinuities are produced. In particular, let's consider a series of scatterers spaced of a time lag $\tau$ each of which producing a backscattered burst with amplitude $a$ and time extent $T$ and let's assume the first scatterer to be positioned at $t = t_0$. The first series of discontinuity is located in the time instants $t_s = t_0 + n\tau$ whereas the second one is located in $t_e = t_0 + n\tau + T$ for a generic integer $n$. As demonstrated above, between each discontinuity, the phase signal is a ramp having slope $\omega_0$. Moreover, considering a couple of time instants $t = \bar{t}$ and $t = \hat{t}$ with $\hat{t} = \bar{t} + \tau$, the phase function can assume the following values

$$\begin{cases} \vartheta_{RF}(\bar{t}) = \omega_0 \left( \bar{t} - t_{s(\bar{t})+N(\bar{t})-1} \right) + \omega_0 \sum_{k=1}^{N(\bar{t})-1} \frac{\tau_{s(\bar{t})+k}}{2^{N(\bar{t})-k}} + \omega_0 \sum_{k=1}^{N(\bar{t})-1} \frac{\tau_{0,k}}{2^{N(\bar{t})-1-k}}, \\ \vartheta_{RF}(\hat{t}) = \omega_0 \left( \hat{t} - t_{s(\hat{t})+N(\hat{t})-1} \right) + \omega_0 \sum_{k=1}^{N(\hat{t})-1} \frac{\tau_{s(\hat{t})+k}}{2^{N(\hat{t})-k}} + \omega_0 \sum_{k=1}^{N(\hat{t})-1} \frac{\tau_{1,k+1}}{2^{N(\hat{t})-1-k}}. \end{cases} \tag{23}$$

Now, using the hypothesis of periodically distributed scatterers, it is easy to show that $s(\hat{t})) = s(\bar{t}) + 1$, $N(\hat{t})) = N(\bar{t})$, and therefore

$$\begin{cases} \vartheta_{RF}(\bar{t}) = \omega_0 \left( \bar{t} - t_{s(\bar{t})+N(\bar{t})-1} \right) + \omega_0 \sum_{k=1}^{N(\bar{t})-1} \frac{\tau_{s(\bar{t})+k}}{2^{N(\bar{t})-k}} + \omega_0 \sum_{k=1}^{N(\bar{t})-1} \frac{\tau_{0,k}}{2^{N(\bar{t})-1-k}}, \\ \vartheta_{RF}(\hat{t}) = \omega_0 \left( \hat{t} - t_{s(\bar{t})+N(\bar{t})} \right) + \omega_0 \sum_{k=1}^{N(\bar{t})-1} \frac{\tau_{s(\bar{t})+k+1}}{2^{N(\bar{t})-k}} + \omega_0 \sum_{k=1}^{N(\bar{t})-1} \frac{\tau_{1,k+1}}{2^{N(\bar{t})-1-k}}. \end{cases} \tag{24}$$

Since the backscattered bursts are equally spaced by $\tau$ and have a constant amplitude $a$, then $\tau_{s(\bar{t})+k+1} = \tau_{s(\bar{t})+k}$ and $\tau_{0,k} = \tau_{1,k+1}$ and thus the sum terms in equations (24) result to be equal two by two. Moreover, recalling that in this case $t_{s(t)} = t_{s(t)-1} + \tau$,

$$\vartheta_{RF}(\hat{t}) = \omega_0 \left( \hat{t} - t_{s(\bar{t})+N(\bar{t})} \right) + \phi = \omega_0 \left( \hat{t} - t_{s(\bar{t})+N(\bar{t})-1} - \tau \right) + \phi = $$
$$= \omega_0 \left( \hat{t} - \tau - t_{s(\bar{t})+N(\bar{t})-1} \right) + \phi = \omega_0 \left( \bar{t} - t_{s(\bar{t})+N(\bar{t})-1} \right) + \phi \tag{25}$$

where

$$\phi = \omega_0 \sum_{k=1}^{N(\bar{t})-1} \frac{\tau_{s(\bar{t})+k}}{2^{N(\bar{t})-k}} + \omega_0 \sum_{k=1}^{N(\bar{t})-1} \frac{\tau_{0,k}}{2^{N(\bar{t})-1-k}} = \omega_0 \sum_{k=1}^{N(\bar{t})-1} \frac{\tau_{s(\bar{t})+k+1}}{2^{N(\bar{t})-k}} + \omega_0 \sum_{k=1}^{N(\bar{t})-1} \frac{\tau_{1,k+1}}{2^{N(\bar{t})-1-k}}.$$

Therefore,

$$\vartheta_{RF}(\bar{t}) = \vartheta_{RF}(\bar{t} + \tau) = \vartheta_{RF}(\bar{t}), \tag{26}$$

which means that the function $\vartheta_{RF}(t)$ is periodical with period $\tau$.

The same result can be obtained by means of the expressions of the phase jump in the discontinuities. Recalling that in this case we have a couple of discontinuities for each interval comprised between the position of the scatterers which are relative to a bust termination and to a burst beginning or vice versa, it is possible to evaluate the total phase jump by means of the result in Appendix C. In particular, the total phase jump can be expressed as

$$\Delta\vartheta_{RF}\big|_{tot} = \omega_0\left(-\frac{\tau_{s(\bar{t})+1}}{2^{N(\bar{t})}} - \sum_{k=1}^{N(\bar{t})}\frac{\tau_{s(\bar{t})+k}}{2^{N(\bar{t})-k+1}}\right) + \omega_0\left(\sum_{k=1}^{N(\bar{t})-1}\frac{\tau_{1,k+1} - \tau_{0,k}}{2^{N(\bar{t})-k-1}}\right), \tag{27}$$

and considering that in this case $\tau_{1,k+1} = \tau_{0,k}$ and $\tau_k = \tau$, $\forall k$ due to the not varying arrangement of the scatterers,

$$\Delta\vartheta_{RF}\big|_{tot} = \omega_0\left(-\frac{\tau}{2^{N(\bar{t})}} - \sum_{k=1}^{N(\bar{t})}\frac{\tau}{2^{N(\bar{t})-k+1}}\right) = \omega_0\left(-\frac{\tau}{2^{N(\bar{t})}} - \frac{\tau}{2^{N(\bar{t})+1}}\sum_{k=1}^{N(\bar{t})}2^k\right) =$$
$$= \omega_0\left(-\frac{\tau}{2^{N(\bar{t})}} + \frac{\tau}{2^{N(\bar{t})+1}} \cdot 2 \cdot (1 - 2^{N(\bar{t})})\right) = -\omega_0\tau, \tag{28}$$

and therefore the total phase jump equals the ramp excursion inside the period, i.e. the phase function is periodical.

This second derivation underlines an interesting aspect regarding this particular case. Both in the case of one or two discontinuities within two successive scatterers position, the total amount of phase jump, which is $\omega_0\tau$, is equal to the phase gain due to the ramp term within the scatterers succession period. Therefore, since the positions of the discontinuities are bounded to the scatterer positions but depends also on the backscattered burst length, we deduce that the phase jump values vary as the backscattered signal duration varies.

Another important remark of the result derived above is that the function $\vartheta_{RF}(t)$ assumes a more and more reduced set of values as the period of the scatterer succession becomes smaller and smaller. In particular, if the period $\tau$ is smaller than the period of the transmitted burst, which is $1/(2\pi f_0)$, the set of values covered by the function are smaller than $2\pi$ and therefore some values of the interval $[0,2\pi)$ are never assumed. This justifies the result shown in the above mentioned papers by Weng where the phase histograms of complex backscattered signal were discussed.

Case e

Now it is time to extend the previous results obtained with the assumption of case c to a more realistic case related to the transmission of a weighted time-limited signal correspondent to an ultrasonic pulse produced by a generic transducer. Let the transmitted signal be expressible in the following form

$$s(t) = W_T(t) \cdot \sin(\omega_0 t), \tag{29}$$

where $W_T(t)$ is a generic weighting function which assumes values different by zeros only in the interval $[-T/2, T/2]$. By using the inverse Fourier Transform, it is possible to express $s(t)$ as

$$s(t) = \int_{-\infty}^{+\infty} A(\omega)e^{j\phi(\omega)} \cdot e^{j\omega t} d\omega, \tag{30}$$

being $A(\omega)$ and $\phi(\omega)$, respectively, the amplitude and phase in the frequency domain.

As before, it is possible to assume that the received RF signal derived from a generic succession of scatterers has the following expression

$$x(t) = \sum_{i=0}^{N(\bar{t})-1} a_i \cdot s\left( \omega_0\left( t - t_0 - \sum_{j=1}^{s(\bar{t})-1} \tau_j - \sum_{k=0}^{i} \tau_{s(t)+k} \right) \right), \qquad t \in (t_{d1}, t_{d2}).$$

(31)

Using (30) it is possible to write

$$x(t) = \sum_{i=0}^{N(\bar{t})-1} a_i \cdot \int_{-\infty}^{\infty} A(\omega)e^{j\phi(\omega)} \cdot e^{j\omega\left( t-t_0 - \sum_{j=1}^{s(\bar{t})-1}\tau_j - \sum_{k=0}^{i}\tau_{s(t)+k} \right)} d\omega$$

$$= \int_{-\infty}^{\infty} A(\omega)e^{j\phi(\omega)} \cdot \left\{ \left( \sum_{i=0}^{N(t)-1} a_i \cdot \cos\left( \omega\left( t - t_0 - \sum_{j=1}^{s(t)-1}\tau_j - \sum_{k=0}^{i}\tau_{s(t)+k} \right) \right) \right) + \right.$$

$$\left. + j\left( \sum_{i=0}^{N(t)-1} a_i \cdot \sin\left( \omega\left( t - t_0 - \sum_{j=1}^{s(t)-1}\tau_j - \sum_{k=0}^{i}\tau_{s(t)+k} \right) \right) \right) \right\} d\omega.$$

(32)

Now, by using equations (21) and (B6) some further derivations can be done, i.e.

$$x(t) = a_{0,N(t)-1} \int_{-\infty}^{\infty} A(\omega)e^{j\phi(\omega)} \cdot \left\{ \cos\left( \omega\left( t - t_0 - \sum_{j=1}^{s(t)+N(t)-1}\tau_j - \sum_{k=1}^{N(t)-1}\tau_{s(t)+k} \right) \right) + \right.$$

$$\left. + j\sin\left( \omega\left( t - t_0 - \sum_{j=1}^{s(t)+N(t)-1}\tau_j - \sum_{k=1}^{N(t)-1}\tau_{s(t)+k} \right) \right) \right\} d\omega =$$

$$= a_{0,N(t)-1} \cdot \int_{-\infty}^{\infty} A(\omega)e^{j\phi(\omega)} \cdot e^{j\omega\left( t-t_0 - \sum_{j=1}^{s(t)+N(t)-1}\tau_j - \sum_{k=1}^{N(t)-1}\tau_{s(t)+k} \right)} d\omega =$$

(33)

$$= a_{0,N(t)-1} \cdot s\left( t - t_0 - \sum_{j=1}^{s(t)+N(t)-1}\tau_j - \sum_{k=1}^{N(t)-1}\tau_{s(t)+k} \right) =$$

$$= a_{0,N(t)-1} \cdot W_T\left( t - t_0 - \sum_{j=1}^{s(t)+N(t)-1}\tau_j - \sum_{k=1}^{N(t)-1}\tau_{s(t)+k} \right) \cdot \sin\left( \omega_0\left( t - t_0 - \sum_{j=1}^{s(t)+N(t)-1}\tau_j - \sum_{k=1}^{N(t)-1}\tau_{s(t)+k} \right) \right)$$

$$with \qquad t \in (t_{d1}, t_{d2}).$$

The previous relation is a generalization of expression (22) which can be obtained considering that, in this case, $W_T(t)$ = $rect(t/T)$ =1, $t \in (t_{d1}, t_{d2})$. However, in general, expression (33) matches formally the generic form of a backscattered RF signal exposed in (22) and therefore the phase term can be extracted as already seen.

From equation (33) it becomes evident that, in case of a large number of scatterers falling inside the burst length T, each interval comprised between two successive discontinuities has an extension which is negligible with respect to T and thus the weighing function can be approximated by a constant function for each $t \in (t_{d1}, t_{d2})$. From another point of view, if $\bar{t}_d$ is the mean interval extension between two successive discontinuities or scatterers, and if $T_c$ is the time interval within which the function $W_T(t) \approx k$, then, if $\bar{t}_d \ll T_c$, then expression (22) can be used instead of the more general expression (33). This means that for this kind of analysis, the time extension needs not to be reduced like for conventional ultrasonic techniques based on the magnitude information in order to improve the system resolution.

Moreover, classical weighting function as Gaussian window, Hamming function and similar cannot be considered optimal for this context because the constraint $\bar{t}_d \ll T_c$ leads to very long pulses being, for such functions, $T_c \ll T$. Conversely, more flat weighting functions, permits to limit the burst extension once $\bar{t}_d$ is determined because, in such case, $\bar{t}_d \ll T_c \approx T$. The case that permits the smallest burst length is the rectangular weighting function where $T_c = T$, but unfortunately it is a not bandwidth limited signal and therefore cannot be emitted by any transducer.

Case f

In this paragraph, some issues related to the real world context are considered. A first interesting aspect when using the phase signal is the amplification insensitiveness which is obtained by definition of the phase signal and its derivatives. As shown before, the value of the phase jumps is function also of the amplitudes of the backscattered bursts through the terms $\tau_{0,i}$ and this takes into account the dependence of the phase signal on the differences in the reflectivity of any scatterers with respect to those located nearby within the burst extension T . However, any cause of amplitude scaling of the received signal does not affect the phase signal. Therefore, all the parameters that can be extracted by the phase signal result insensitive by mean echogenicity values exhibited by a tissue in a particular region as well as any other amplitude scaling function due to a variety of reasons as depth attenuation, time-gain compensation, and others. Therefore, until the coherent backscattered signal is higher that the noise signal, no difference can be revealed due to reduced amplitude of the backscattered bursts. However, as the signal becomes comparable with the noise signal, the phase signal is subject to an abrupt depauperation, which corresponds to the typical random pattern due to noise phase signal setting up.

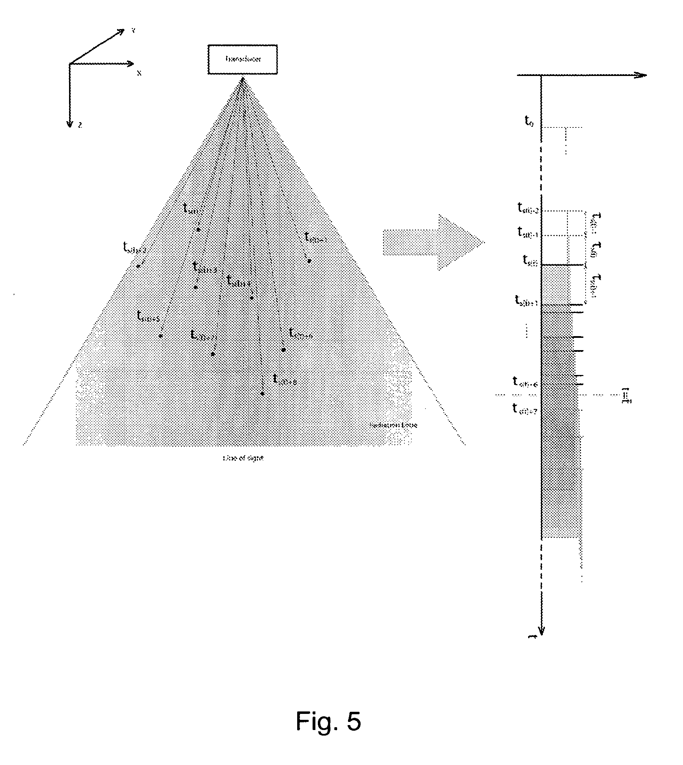

In real-world ultrasonic applications, the first infringed hypothesis among those stated in the previous formalization is the infinite lateral resolution. This means that in the received signal, not only scatterers lying on the considered line of sight give contribute, but also all the scatterers lying in a region of space whose extent is function of the radiation lobe of the transmitting and receiving system. The effect of the system radiation lobe can be summarized as a spatial varying weighting function for backscattered bursts from the medium. Since the amplitude scaling does not affect phase contributes, as discussed before, potentially a large area contributes to a single echo signal, because even for very peripheral scatterers it is possible to have a contribute which does not differ at all from those scatterers lying closely to the considered line of sight. This fact can be considered a problem difficult to be solved with traditional acquisition techniques when the purpose of using phase signal is the extraction of scatterer position mapping. However, the same fact results in a useful principle helping to have an overall view through phase parameters of a whole region rather than a single line of sight. In Fig. 5, by means of a simple two-dimensional sketch, it is shown that each scatterer within the radiation lobe contributes to the phase signal regardless its distance from the line of sight, that is regardless the value of the amplitude scaling value due to the radiation lobe. The position of the discontinuities introduced by each scatterer is proportional to the distance between the scatterer itself and the position of the transducer. The same consideration can be done on the transverse plane recalling that the radiation lobe width can vary. Therefore, some global parameters, as the concentration of scatterers, can be estimated, for each depth z, through a single line of sight in a voxel whose dimension can be approximated as $d_1(z) \times d_2(z) \times (T/2 \cdot c)$, where $d_1(z)$ and $d_2(z)$ are the horizontal dimension of the radiation lobe in the plane XZ and YZ.

Another important aspect to take into account is the impact of the frequency dependent attenuation during the propagation. As seen in "case e", a generic weighting function of the transmitted pulse would be more and more compact as $T_c$ goes closer and closer to T. However, a weighting function having $T_c \approx T$ presents sharp tails that necessitate large bandwidth requirements. Even if the used transducer has a large bandwidth and thus it would allow the transmitted signal to have such sharp fronts, it should be considered that it is not possible to assume the conservation of the pulse fronts slope during the propagation which is subjected to frequency dependent attenuation, and therefore $T_c$ has to be dimensioned recalling that its value decreases when the inspection depth increases.

Finally, focalisation should be taken into account, in order to consider the impact of a conventional ultrasonic acquisition chain on the phase signal features.

Let's consider a linear array with $2S + 1$ elements which are excited with the same burst. Moreover, we assume the apodization law $b_s, s \in [-S, S]$ to be symmetric, that is, $b_s = b_{-s}$ . The same assumption is done on the delays law, both for transmission and reception that are respectively denoted by $\varsigma_s^t$ and $\varsigma_s^r$ , and therefore, $\varsigma_s^t = \varsigma_{-s}^t, \varsigma_s^r = \varsigma_{-s}^r$ .

By definition, the delay associated to the central transducer, which correspond to the line of sight track, is set to zero, i.e. $\varsigma_0^t = 0, \varsigma_0^r = 0$ .

Now, recalling that we are considering the phase of the backscattered signal coming from a spatial region located on the line of sight at a given depth $\bar{z}$ , or more precisely with respect to the reference system of Fig. 5 in the spatial point

$(x = 0, z = \bar{z})$, it is possible to define the additional time $t_s^{p \, \backslash}(\bar{t})$ which correspond to the distance increasing between this spatial point and a generic transducer element for $s \neq 0$, being $\bar{t} = 2\bar{z} \cdot c$.

On the basis of such definitions, it is possible to write a simplified version of the backscattered signal with the assumption that all the emitted beams can be considered parallel for $t = \bar{t}$, i.e.,

$$x(\bar{t}) = \sum_{s=-S}^{S} b_s \cdot \sum_{i=0}^{N(\bar{t})-1} a_i \cdot \cos\left(\omega_0\left(\bar{t} - t_0 - \sum_{j=1}^{s(i)-1}\tau_j - \sum_{k=0}^{i}\tau_{s(t)+k} - 2t_s^p(\bar{t}) + \varsigma_s^t(i) + \varsigma_s^r(i)\right) + \phi\right) =$$

$$= 2 \cdot \sum_{s=0}^{S-1} b_s \cdot \sum_{i=0}^{N(\bar{t})-1} a_i \cdot \cos\left(\omega_0\left(\bar{t} - t_0 - \sum_{j=1}^{s(\bar{t})-1}\tau_j - \sum_{k=0}^{i}\tau_{s(t)+k} - 2t_s^p(\bar{t}) + \varsigma_s^t(i) + \varsigma_s^r(i)\right) + \phi\right) \qquad (34)$$

$$with \quad \bar{t} \in (t_{d1}, t_{d2}).$$

Generally conventional focusing systems are static for transmission and dynamic for reception. For this particular case, the dynamic compensation allows to say that $\varsigma_s^r(i) = t_s^p(\bar{t})$, whereas for transmission $\varsigma_s^t(i) = \varsigma_s^t$, which means the usage of a time-invariant delay law. Consequently, by defining $t_s^d(\bar{t}) = t_s^p(\bar{t}) - \varsigma_s^t$, we obtain

$$x(\bar{t}) = 2 \cdot \sum_{s=0}^{S-1} b_s \cdot \sum_{i=0}^{N(\bar{t})-1} a_i \cdot \cos\left(\omega_0\left(\bar{t} - t_0 - \sum_{j=1}^{s(\bar{t})-1}\tau_j - \sum_{k=0}^{i}\tau_{s(t)+k} - t_s^d(\bar{t})\right) + \phi\right), \qquad \bar{t} \in (t_{d1}, t_{d2}).$$
$$(35)$$

In Appendix D a derivation of this expression is shown, and in particular as shown in (C5),

$$x(\bar{t}) = 2 \cdot a_{0,N(\bar{t})-1} \cdot \left\{ b_{0,S} \cdot \cos\left(\omega_0\left(\bar{t} - t_0 - \sum_{j=1}^{s(\bar{t})+N(\bar{t})-1}\tau_j + \sum_{k=1}^{N(\bar{t})-1}\frac{\tau_{s(\bar{t})+k}}{2^{N(\bar{t})-k}} + \sum_{k=1}^{N(\bar{t})-1}\frac{\tau_{0,k}}{2^{N(\bar{t})-1-k}} - \sum_{k=1}^{S}\frac{t_k^d(\bar{t})}{2^{S-k+1}} + \sum_{k=1}^{S}\frac{t_{0,k}^d(\bar{t})}{2^{S-k+1}}\right) + \phi\right) \right\}, \qquad (36)$$

$$\bar{t} \in (t_{d1}, t_{d2}).$$

where $a_{0,i}, \tau_{0,i}$ and $b_{0,j}$, $t_{0,j}^d(\bar{t})$ are expressed respectively in (A7) and (C6).

Expression (36) is quite suggestive since evidences two very similar couple of terms, i.e. the four last terms in the cosine argument. This formalization underlines an intuitive concept: the interference caused by multiple bursts backscattered by multiple scatterers at different depths can be modelled as the interference of multiple bursts opportunely delayed that are insonifying a single scatterer. However, the two couples of sums are rather different from a physical point of view because $s(\bar{t}), N(\bar{t}), \tau_i, \tau_{0,i}$ are random variables whereas $S$ is a parameter and $t_i^d(\bar{t}), t_{0,i}^d(\bar{t})$ are completely determinable for any value of $\bar{t}$. Therefore, by means of geometrical considerations and by means of the transmit delay law knowledge, it is possible to compute by relations (C5) and (C6) the expression of the two last sums as an additional phase term due to focalization which is only function of the depth, i.e.

$$\vartheta_{RF}(\bar{t})\Big|_{focused} = \omega_0\left(\bar{t} - t_0 - \sum_{j=1}^{s(\bar{t})+N(\bar{t})-1}\tau_j - \sum_{k=1}^{N(\bar{t})-1}\frac{\tau_{s(\bar{t})+k}}{2^{N(\bar{t})-k}} + \sum_{k=1}^{N(\bar{t})-1}\frac{\tau_{0.k}}{2^{N(\bar{t})-1-k}} - \sum_{k=1}^{S}\frac{t_k^d(\bar{t})}{2^{S+1-k}} + \sum_{k=1}^{S}\frac{t_{0.k}^d(\bar{t})}{2^{S-k-1}}\right) + \phi =$$

$$= \omega_0\left(\bar{t} - t_0 - \sum_{j=1}^{s(\bar{t})+N(\bar{t})-1}\tau_j - \sum_{k=1}^{N(\bar{t})-1}\frac{\tau_{s(\bar{t})+k}}{2^{N(\bar{t})-k}} + \sum_{k=1}^{N(\bar{t})-1}\frac{\tau_{0.k}}{2^{N(\bar{t})-1-k}}\right) + \phi + \omega_0\xi(\bar{t}) =$$

$$= \vartheta_{RF}(t)\Big|_{unfocused} + \omega_0\xi(\bar{t}), \tag{37}$$

where $\xi(\bar{t}) = \sum_{k=1}^{S}\frac{t_{0.k}^d(\bar{t})}{2^{S-k-1}} - \sum_{k=1}^{S}\frac{t_k^d(\bar{t})}{2^{S+1-k}}$ is the time/depth dependent function which can be computed for $\forall \bar{t}$ once the

acquisition system has been defined. Therefore, the conventional focusing techniques of common scanners do not prejudice the possibility to determine structural information from the phase signal.

It should be noted that the proposed model does not take into account the possibility that the various beams travelling from each transducer to the region of interest are crossing regions with different speed of sound. In that case, some aberration on the phase of a signal received through beam-forming would alter the previous relations although the underline principle remains still valid.

Information Extraction Techniques

The previous paragraph has shown that several information can be extracted from the phase of the received signal, whether it is RF or baseband signal. As already discussed, the information is carried on the phase discontinuities whose value and position are function of the position of the insonified scatterers. Between two successive discontinuities, the phase signal can be modelled as a constant slope ramp which does not carry any information. As a consequence of such consideration, the derivative operator seems to be a first tool to evidence the salient part of the signal.

A first observation of equations (20), (21) and (22) permits to notice two different contributes to the phase jump; the first one is function of the time distance between interfering scatterers, that is, $\tau_{s(\bar{t})+i}$, whereas the second one is function of the parameters $\tau_{0,i}$ and $\tau_{1,i}$ that in their turn are mixed function of both the time distance between scatterers and echogenicity. The first term consists of a weighted sum of the time distances. Since the multiplying term is exponentially decreasing, this value does not depart too much from the sum of the first elements, that is, as $N(\bar{t})$ increases the successive elements of the sum become more and more negligible. Conversely, no direct considerations can be made on the second term which involves $\tau_{0,i}$ and $\tau_{1,i}$. However, it should be noted that, being these terms the result of an arctangent, their value can assume any values comprised in the interval $\left[-\frac{\pi}{2}, \frac{\pi}{2}\right]$. In real cases, the maximum values that the first term can assume are negligible with respect to the maximum values that the second terms can assume due to the very high density of scatterers, or better, due to the very low mean distance between them.

Moreover, as already underlined, the second term is much more irregular than the first one due to the expression of both $\tau_{0,i}$ and $\tau_{1,i}$. However, also the first term results not too much interesting in order to infer the disposition of the interfering scatterers since it is a single parameter which is related to the vector of positions of all the scatterers producing bursts that are interfering in the considered point. In other words the first term is a function f : R^n → R where the domain dimension n is the number of interfering burst in the considered point and whose argument is the distance between each interfering scatterer. This function reduces to a function $f : \Re^n \rightarrow \Re$ only in the case of equally spaced scatterers and therefore only in this case it is possible to exactly relate a topological parameter as the distance between scatterers to the function values as demonstrated in the previous section.

The special case of equally spaced and equally echogenic scatterers has furthermore demonstrated that the phase jumps values decrease as the space between scatterer decreases, if the frequency of transmitted burst is fixed. This result can be indirectly extended to a not-perfectly-regular scatterer disposition once mean distance between scatterer is considered.

Therefore, in a real case where the inspected tissues can be modelled as a homogeneous medium with a dense dissemination of scatterers that are moving for a great variety of reasons (thermal agitation, micro-pulsation, respiration, etc...), we face with a very non stationary phase signal presenting some highly noticeable discontinuities, that vary their position between two successive acquisitions, among very frequent small discontinuities. The non-stationarity greatly depends on the second term that can vary sensibly as a scatterer enters or exits the region having extension T. Furthermore, for the reason explained above, this second term is also almost completely responsible of the high spikes in the instantaneous frequency signal.

If we are looking for some information regarding mean characteristics of the tissue and its structure, like the number of scatterer in the region of interest, we should try to suppress or ignore the second term by means of averaging techniques, whether linear or not. In any case, it is not possible to remove this term in order to reveal the local value of the first term that is instead related to the number of scatterers falling in the resolution cell and thus the estimation of the local scatterer density through the phase signal or its derivative is not a trivial task. The only way to differentiate these two contributes is from statistical point of view. Indeed, as demonstrated in S. O. Rice, "Statistical Properties of a Sine Wave Plus Random Noise," Bell System Technical Journal, J. 27, p. 109-157, Jan. 1948 and N. G. Gatkin, V. A. Geranin, M. I. Karnovskiy, L. G. Krasnyy, and N. I. Cherney, "Probability density of phase derivative of the sum of a modulated signal and Gaussian noise," Radio Eng. Electron. Phys. (USSR), n. 8, pp. 1223-1229, 1965 in analogous studies on the telecommunications, the RF phase signal derivative, or instantaneous frequency, has a not finite variance due to the presence of the discussed spikes. However, if the phase derivative signal is subjected to regularization procedure, the variance can be written also in a closed form (see the above paper by Rice and J. M. Thijssen, B. J. Oosterveld, and R. L. Romijn, "Phase-Derivative Imaging III: Theoretical Derivation of the First and Second Order Statistics, Ultrasonic Imaging, n. 12, pp. 17-34, 1990). Now, since the nature of contribute to the discontinuities by the two terms are so different, also local statistics of this signal where the first or the second contribute is predominant will be differentiable. Therefore, by exploiting the ergodicity hypothesis, the instantaneous frequency signal can be used to extract local statistics and, for those regions where these statistics indicate that the first terms is predominant, an approximated estimation of the number of scatterers per volume unit can be made by assuming that the scatterers are almost equally spaced. Indeed, as demonstrated with expression (28), if the disposition of scatterers is perfectly regular, the total phase jump inside the area covered by the burst is proportional to the time distance between scatterers. Therefore, for quasi regular distributions, similar conclusion can be drawn if the mean time distance between scatterers. In particular, if the sample mean of the time distance between scatterers is denoted by $\langle\tau\rangle$, and the sample mean of the total phase jump is $<\Delta\vartheta_{RF}|_{tot}>$, then

$$\langle\tau\rangle = \frac{<\Delta\vartheta_{RF}\big|_{tot}>}{\omega_0}, \tag{38}$$

and therefore the mean of the distance between scatterers can be estimated from a measurable parameter dependent on the phase signal. By assessing the local distribution of the mean distance between scatterers and interfaces, it is possible to have a very powerful parameter that characterizes locally the structure of the inspected medium.

From another perspective, it is possible to use the phase signal jumps for mapping the position of interfaces inside a defined region of interest.

In particular, considering their position, phase jumps occur where backscattered bursts begin and terminate. Unfortunately, the phase jump values are related to the position of all the interfering scatterers by means of a too complex mathematical procedure that avoids the possibility to use this information to exactly infer the scatterer positions. In any case, the derivative operator can be applied to the phase signal to transmute the phase jumps in instantaneous frequency spikes which are more easily detectable. Since we are considering a time discrete signal, numeric derivative is performed which is the incremental ratio evaluated for a time variation which is not less than the sampling time. Therefore, the amplitude of these pulses is only dependent on the phase jump value due to the denominator invariance.

As discussed, the majority of the scatterers originate a couple of discontinuities which values are very small and that are not so easily distinguishable from phase fluctuations. However, recalling that the burst length is known a priori, it is possible to track the discontinuities both at the beginning and at the termination of the backscattered burst. Since the sign of the each discontinuity is not known a priori due to the presence of the pseudo-random terms depending on $\tau_{1,i}$ and $\tau_{0,i}$, a simple procedure to reveal the position of a scatterer is to consider the absolute module of the instantaneous frequency which presents positive spikes for any revealed discontinuity and to sum this signal with its translation of a time interval $_T$. In such a case, both the spikes generated by a scatterer sum each other giving a simultaneous contribute to the detectability of a spike positioned where the scatterer is positioned. If repeating this procedure with the instantaneous frequency signals obtained by backscattered signal related to different values of transmitted burst length, it is possible to increase noticeably the value of the spike positioned in correspondence of each scatterer. It is clear that this procedure creates fake spikes in time position where no scatterer are present. Anyway, since the time position of scatterers and interfaces are not dependent by the values of transmitted burst lengths $T_1$, $T_2,...T_L$, the summation of fake spikes can be considered a summation of incoherent contributes. Therefore, as the number of transmitted burst increases, the spikes positioned in correspondence of scatterers increase coherently their value whilst in time position where no scatterer or interface is present, an incoherent summation takes place originating a small spiky bed which can be considered the noise level of this signal.

The introduced process can be summarized as follows:

- Clear the buffer $\Psi_n$.
- For i: 1-L

    o Transmit a pulse with time duration $T_i$.
    o Extract phase signal from complex RF or baseband signal.

    o Apply numerical derivative to the phase signal in order to retrieve the instantaneous frequency signal

$$\dot{\vartheta}_n = \dot{\vartheta}(\frac{n}{f_s})$$ where $f_s$ is the sampling frequency of the system.

    o Compute the signal $\Psi_{i,n} = \vartheta_n + \vartheta_{n+m}$ where, using the operator $\lceil \rceil$ for the extraction of the nearest integer, m = $\lceil T_i . f_s \rceil$.
    o Accumulate the signal $\Psi_i,n$ into the buffer $\Psi_n$, i.e. $\Psi_n = \Psi_n + \Psi_{i,n}$.

- Eventually, threshold the signal under a fixed value.

The previous algorithm works better when considering a low concentration of interfaces and scatterers per volume unit both for the maximization of the phase jump and for the minimization of incoherent summation due to more elevated distance between spikes. The SNR of the method increases as the number of the transmitted bursts increases and therefore this parameter has to be traded off with the acquisition time of each line of sight. In real contexts, due to the frequency attenuation propagation, the length of the burst varies with the depth. Therefore, such approach is still valid if a region of limited extension is considered with burst dimensions opportunely scaled with respect to the depth.

The possibility of tracking with a good accuracy the position of scatterers and interfaces can interest a great variety of algorithms in the ultrasonic ambit. For example, variations of local speed of sound due to temperature or other reasons can be monitored as an apparent relative displacement in the time track of the discontinuities related to scatterers that can be assumed fixed in their space positions. From another point of view, scatterers and interfaces mapping through phase signal can be exploited to take the place of correlation techniques used for time-delay estimation (see F. Viola and W. Walker, "A comparison of the performance of time-delay estimators in medical ultrasound," IEEE Trans. Ultrason. Ferroelectr. Freq. Control, vol. 50, no. 4, pp. 392-401, Apr. 2003) and elastography (see I. Céspedes, Y. Huang, J. Ophir, and S. Spratt, "Methods for estimation of subsample time delays of digitized echo signals," Ultrason. Imag., vol. 17, pp. 142-171, Apr. 1995) in order to obtain more stable estimations. The strong phase variations revealed through instantaneous frequency signal can also be adopted as signal feature extraction, which is not dependent on the amplitude signal. An important contest where this can be applied is in the velocity estimation through feature tracking of blood and tissue motion.

More in general, some features of the phase derivative signal (instantaneous frequency) can be used as reference for a vast variety of algorithms that necessitate tracking backscattered signal patterns. In fact, when a feature of the phase signal, or its derivative, varies its position preserving its shape, a corresponding rigid translation of the scatterers inside the resolution cell occurs.

Moreover, since the phase discontinuities due to the speckle term correspond to unwanted magnitude variations, the localization of such features can be used in order to drive any adaptive de-speckling filter.

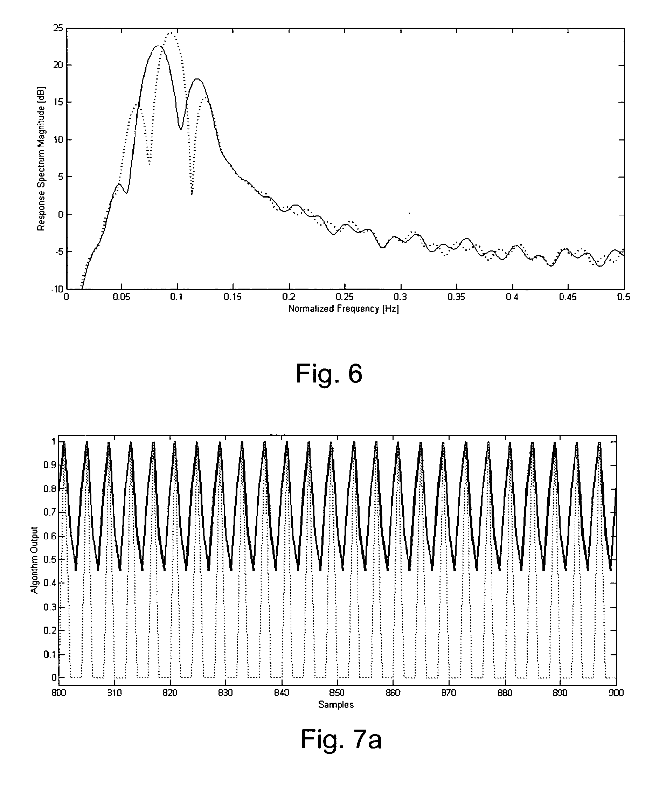

The proposed approaches are time domain elaborations of the phase signal and thus transformation to the frequency domain are not used. This permits to avoid to trade off the time domain resolution with that in the frequency domain. Even if wavelet transform has been demonstrated to be optimal for handling this compromise, if the physical parameters used to model the surrounding inspected media can be extracted directly in the time domain, an increased locality of the features is obtained. In order to demonstrate how the mean distance between scatterers, which can be assessed through the phase signal, can be compared with the other tissue characterizing algorithms operating on the received signal spectrum, in Fig. 6 the spectrum of three backscattered echoes obtained simulating two different time distance between two scatterers are shown. As can be noticed, the scalloping is different in each case and therefore we can state that local estimation of the scalloping effect can be mutually exchanged with phase feature extraction.

Simulation results

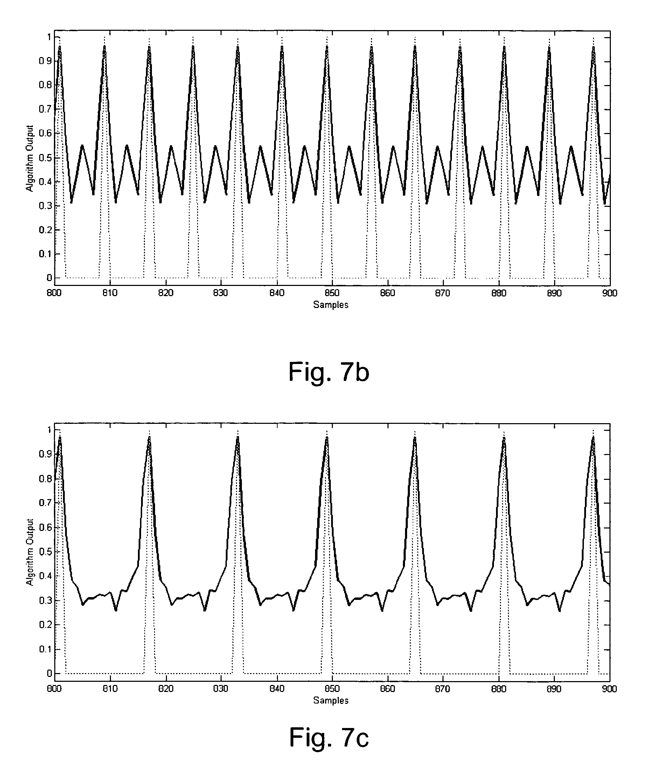

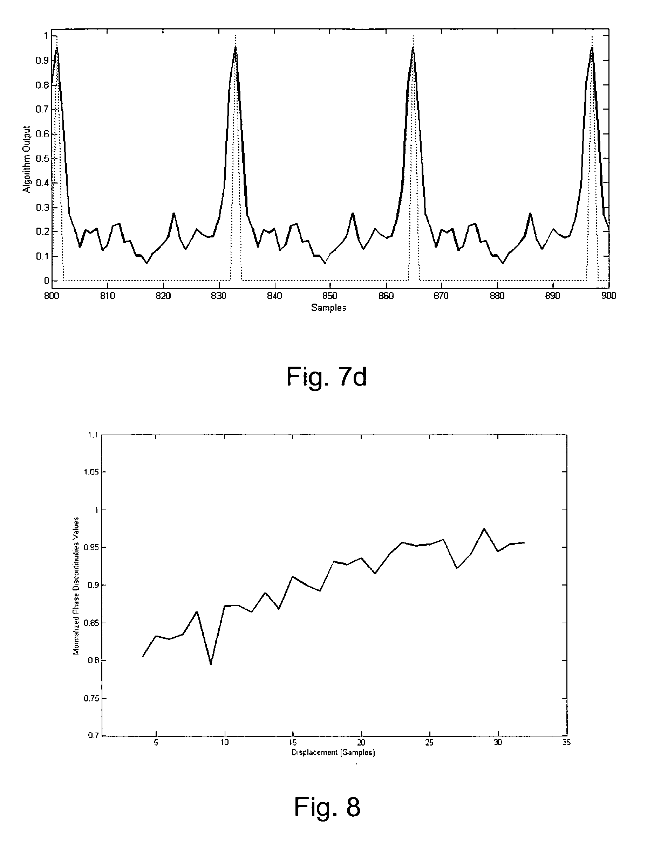

Some simulations have been performed in order to validate the theory. First of all, some simulated test-objects have been produced by arranging different sequences of equally spaced and equally echogenic scatterers through a region of interest. The backscattered signal received from four of these sequences, having scatterers displacement of 4, 8, 16, and 32 samples, has been then obtained as a convolution of the relative delta sequence with the transmitted pulse having time extension of 40 samples and consisting of a rectangular windowed sine with 7.5 cycles. In particular, the transmitted signal corresponds to a $1\mu s$ burst with frequency $f_c$ = 7.5$MHz.$ Considering the transmitted burst time extension, each investigated scatterer sequence results interfering. In each case, the instantaneous frequency has been computed by using expression (4) and then the reconstruction algorithm has been applied considering a single transmitted burst, i.e. with L =1. Results are shown in Fig. 7, which demonstrates that this parameter is periodic of the time distance between the interfering scatterers being the superposition of two differently translated replicas of the instantaneous frequency. Moreover it can be revealed that as the distance between scatterers decreases, the total phase jump in the period decreases and therefore the spikes of the instantaneous frequency cover a smaller region of the output interval. This is in complete accordance with the results shown in case d. Moreover, it can also be noticed that the output spikes are always positioned in correspondence of the scatterer position as discussed through the whole theoretical dissertation. The same type of trials have been performed not only for the cases shown in Fig. 7, but also using all the scatterers time distance ranging in the interval [4-32] samples. For any scatterer sequence, the reconstruction algorithm has been used and, for any output sequence, the maximum and the minimum value have been computed in order to obtain an estimation of the phase discontinuities extension to be related to the scatterer density. This measure, normalized by the maximum, is reported in Fig. 8 as a function of the scatterer displacements. It can be noticed a quasi-monotonic trend with respect to the time distance between successive scatterers and therefore this suggests the usage of such parameter in order to estimate the scatterer density by the received phase signal.

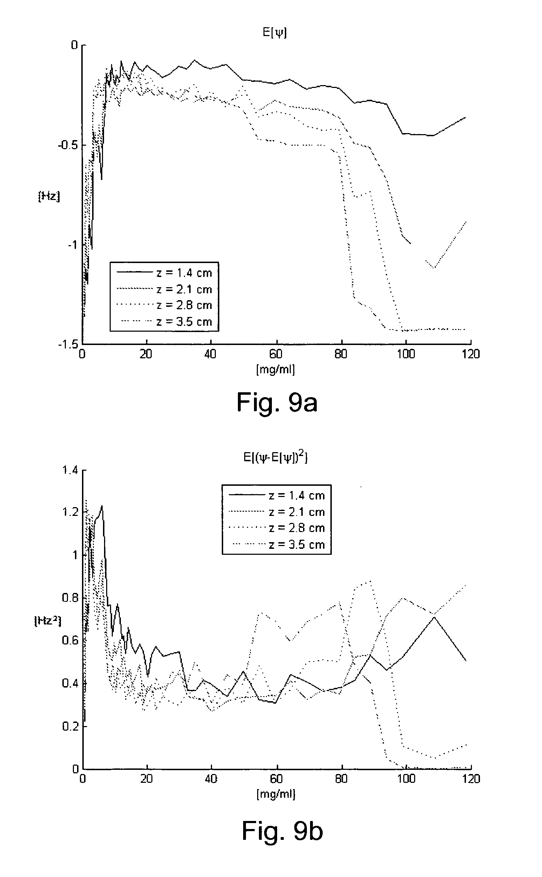

The dependency of the phase signal by the scatterer density has been revealed also through the calculation of the istantaneous frequency $_\Psi(t)$ of some radiofrequency signals acquired from a variable concentration test-object consisting of a lattice tube filled with a concentration controlled dispersion. Fig. 9 shows the dependency of statistical moments of the istantaneous frequency whith respect to the concentration of the dispersion which is insonified at a 7.5 MHz through the commercial linear array ultrasonic probe LA523 and scanner Mylab by Esaote. It is easy to detect a slight negative slope in the first moment between 15 and 80 mg/ml and a correspondent low level value of the variance. By the combined usage of such parameter it is possible to give an approximated estimation of the dispersion scatterer concentration.

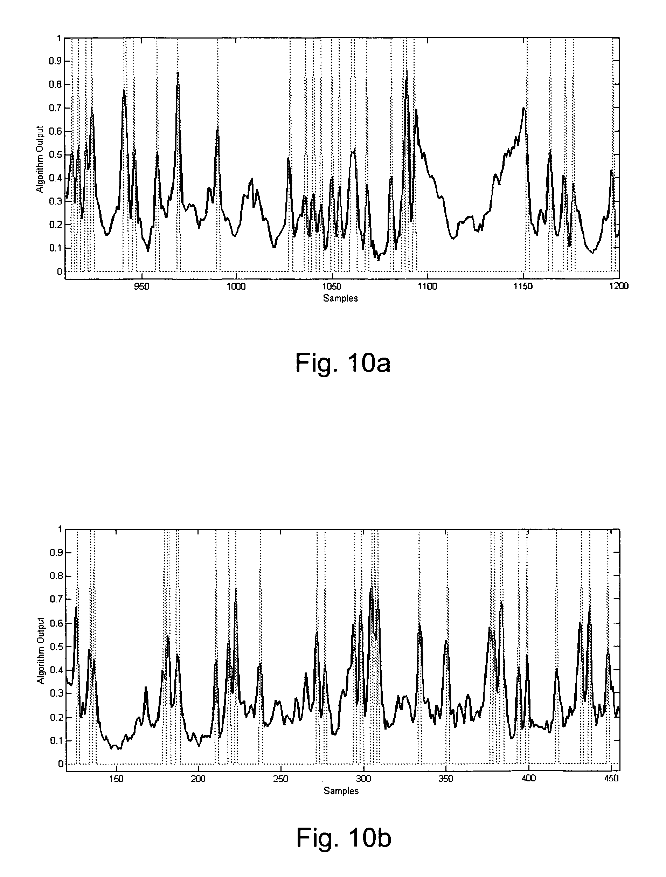

Another kind of simulation has been performed in order to evaluate the reconstruction algorithm performance on a test object composed by several single-sample scatterers randomly disposed on the 10% of the samples of the simulated trace. Two different portions of the reconstruction algorithm results have been shown in Fig. 10a and Fig. 10b.

In Fig. 10 it can be easily noticed how the algorithm output presents spikes in correspondence of each scatterer of the simulated test-object. As already discussed in the theory section and in connection with the previous simulations, the spike extension varies sensibly with respect to the position of the scatterers in the neighbourhood of the considered scatterer. Particularly in Fig. 10a it can be noticed that, where the scatterers are absent, the algorithm output signal can be modelled as a low frequency pattern that can be almost completely removed by using appropriate filtering techniques. However, as shown in Fig. 10b, in some cases spikes which do not correspond to any scatterer are detected. All the same, some signal processing techniques, as filtering and thresholding, can be used in order to remove these false positive cases.

The method and the device according to the present invention can be used, for example, for making direct or indirect measurements of concentration, for example of blood thus detecting a parameter related to the hematocrit, or for typing dense objects like biological tissues. A bidimensional or tridimensional map of structures and/or interfaces can be advantageously superimposed on an image representing such tissue, like for example an ultrasound image, a MRI image, a X-ray image, a SPECT, PECT image or the like. The method according to the invention can also be used in the non-biological field, for example in nondestructive applications.

Although the invention has been mainly disclosed with reference to ultrasounds, the skilled person would appreciate that also other type of signals can be used, for example MRI spin echo signals, all without departing from the guiding principle of the invention disclosed above and claimed below.

<u>Appendix A</u>

The following shows how to express a summation of sinusoids as a single sinusoid with an additional phase term. Let's consider the following expression.

$$x(t) = \sum_{i=0}^{N(t)-1} a_i \cdot \sin\left(\omega_0\left(t - t_0 - \sum_{j=1}^{s(t)-1} \tau_j - \sum_{k=0}^{i} \tau_{s(t)+k}\right) + \phi\right), \qquad (A1)$$

where $\phi \in [0, 2\pi)$. Taking into account the formula

$$k_1 \cdot \sin\alpha + k_2 \cdot \sin\beta = (k_1 + k_2) \cdot \sin\left(\frac{\alpha+\beta}{2}\right) \cdot \cos\left(\frac{\alpha-\beta}{2}\right) + (k_1 - k_2) \cdot \sin\left(\frac{\alpha-\beta}{2}\right) \cdot \cos\left(\frac{\alpha+\beta}{2}\right), \qquad (A2)$$

and the alternative expression for the linear combination of sinusoidal functions

$$c_1 \cdot \cos\alpha + c_2 \cdot \sin\alpha = A \cdot \sin(\alpha + \varphi), \qquad (A3)$$

with $A = \sqrt{c_1^2 + c_2^2}$ and $\varphi = tg^{-1}\left(\frac{c_1}{c_2}\right)$,

it is possible to apply these relations to expression (A1) in order to derive the following:

$$x(\bar{t}) = a_0 \cdot \sin\left(\omega_0\left(\bar{t} - t_0 - \sum_{j=1}^{s(\bar{t})-1}\tau_j - \tau_{s(\bar{t})}\right) + \phi\right) + a_1 \cdot \sin\left(\omega_0\left(\bar{t} - t_0 - \sum_{j=1}^{s(\bar{t})-1}\tau_j - \tau_{s(\bar{t})} - \tau_{s(\bar{t})+1}\right) + \phi\right) +$$

$$+ \sum_{i=2}^{N(\bar{t})-1} a_i \cdot \sin\left(\omega_0\left(\bar{t} - t_0 - \sum_{j=1}^{s(\bar{t})-1}\tau_j - \sum_{k=0}^{i}\tau_{s(\bar{t})+k}\right) + \phi\right) =$$

$$= (a_0 + a_1) \cdot \cos\left(\omega_0\frac{\tau_{s(\bar{t})+1}}{2}\right) \cdot \sin\left(\omega_0\left(\bar{t} - t_0 - \sum_{j=1}^{s(\bar{t})}\tau_j - \frac{\tau_{s(\bar{t})+1}}{2}\right) + \phi\right) +$$

$$+ (a_0 - a_1) \cdot \sin\left(\omega_0\frac{\tau_{s(\bar{t})+1}}{2}\right) \cdot \cos\left(\omega_0\left(\bar{t} - t_0 - \sum_{j=1}^{s(\bar{t})}\tau_j - \frac{\tau_{s(\bar{t})+1}}{2}\right) + \phi\right) + \sum_{i=2}^{N(\bar{t})-1} a_i \cdot \sin\left(\omega_0\left(\bar{t} - t_0 - \sum_{j=1}^{s(\bar{t})-1}\tau_j - \sum_{k=0}^{i}\tau_{s(\bar{t})+k}\right) + \phi\right) =$$

$$= \sqrt{(a_0 + a_1)^2 \cdot \cos^2\left(\omega_0\left(\frac{\tau_{s(\bar{t})+1}}{2}\right)\right) + (a_0 - a_1)^2 \cdot \sin^2\left(\omega_0\left(\frac{\tau_{s(\bar{t})+1}}{2}\right)\right)} \cdot \sin\left(\omega_0\left(\bar{t} - t_0 - \sum_{j=1}^{s(\bar{t})}\tau_j - \frac{\tau_{s(\bar{t})+1}}{2} + \tan^{-1}\left(\frac{a_0 - a_1}{a_0 + a_1} \cdot \tan\left(\frac{\omega_0}{2}\tau_{s(\bar{t})+1}\right)\right)\right) + \phi\right) +$$

$$+ \sum_{i=2}^{N(\bar{t})-1} a_i \cdot \sin\left(\omega_0\left(\bar{t} - t_0 - \sum_{j=1}^{s(\bar{t})-1}\tau_j - \sum_{k=0}^{i}\tau_{s(\bar{t})+k}\right) + \phi\right) =$$

$$= \sqrt{a_0^2 + a_1^2 + 2a_0 a_1 \cdot \cos(\omega_0\tau_{s(\bar{t})+1})} \cdot \sin\left(\omega_0\left(\bar{t} - t_0 - \sum_{j=1}^{s(\bar{t})}\tau_j - \frac{\tau_{s(\bar{t})+1}}{2} + \tan^{-1}\left(\frac{a_0 - a_1}{a_0 + a_1} \cdot \tan\left(\frac{\omega_0}{2}\tau_{s(\bar{t})+1}\right)\right)\right) + \phi\right) + \qquad \text{(A4)}$$

$$+ \sum_{i=2}^{N(\bar{t})-1} a_i \cdot \sin\left(\omega_0\left(\bar{t} - t_0 - \sum_{j=1}^{s(\bar{t})-1}\tau_j - \sum_{k=0}^{i}\tau_{s(\bar{t})+k}\right) + \phi\right)$$

Then, naming $a_{0,1} = \sqrt{a_0^2 + a_1^2 + 2a_0 a_1 \cdot \cos(\omega_0\tau_{s(t)+1})}$ and

$\tau_{0,1} = \tan^{-1}\left(\frac{a_0 - a_1}{a_0 + a_1} \cdot \tan\left(\frac{\omega_0}{2}\tau_{s(\bar{t})+1}\right)\right)$ and going on recursively with relations (A2),

(A3),

$$x(\bar{t}) = a_{0,1} \cdot \sin\left(\omega_0\left(\bar{t} - t_0 - \sum_{j=1}^{s(\bar{t})}\tau_j - \frac{\tau_{s(\bar{t})+1}}{2} + \tau_{0,1}\right) + \phi\right) + a_2 \cdot \sin\left(\omega_0\left(\bar{t} - t_0 - \sum_{j=1}^{s(\bar{t})}\tau_j - \tau_{s(\bar{t})+1} - \tau_{s(\bar{t})+2}\right) + \phi\right) +$$

$$+ \sum_{i=3}^{N(\bar{t})-1} a_i \cdot \sin\left(\omega_0\left(\bar{t} - t_0 - \sum_{j=1}^{s(\bar{t})-1}\tau_j - \sum_{k=0}^{i}\tau_{s(\bar{t})+k}\right) + \phi\right) =$$

$$= (a_{0,1} + a_2) \cdot \cos\left(\omega_0\left(\frac{\tau_{0,1}}{2} + \frac{\tau_{s(\bar{t})+1}}{4} + \frac{\tau_{s(\bar{t})+2}}{2}\right)\right) \cdot \sin\left(\omega_0\left(\bar{t} - t_0 - \sum_{j=1}^{s(\bar{t})}\tau_j - \frac{3}{4}\tau_{s(\bar{t})+1} - \frac{\tau_{s(\bar{t})+2}}{2} + \frac{\tau_{0,1}}{2}\right) + \phi\right) +$$

$$+ (a_{0,1} - a_2) \cdot \sin\left(\omega_0\left(\frac{\tau_{0,1}}{2} + \frac{\tau_{s(\bar{t})+1}}{4} + \frac{\tau_{s(\bar{t})+2}}{2}\right)\right) \cdot \cos\left(\omega_0\left(\bar{t} - t_0 - \sum_{j=1}^{s(\bar{t})}\tau_j - \frac{3}{4}\tau_{s(\bar{t})+1} - \frac{\tau_{s(\bar{t})+2}}{2} + \frac{\tau_{0,1}}{2}\right) + \phi\right) + \sum_{i=3}^{N(\bar{t})-1} a_i \cdot \sin\left(\omega_0\left(\bar{t} - t_0 - \sum_{j=1}^{s(\bar{t})-1}\tau_j - \sum_{k=0}^{i}\tau_{s(\bar{t})+k}\right) + \phi\right) =$$

$$= \sqrt{a_{0,1}^2 + a_2^2 + 2a_{0,1} a_2 \cdot \cos\left(\omega_0\left(\tau_{0,1} + \frac{\tau_{s(\bar{t})+1}}{2} + \tau_{s(\bar{t})+2}\right)\right)} \cdot$$

$$\cdot \sin\left(\omega_0\left(\bar{t} - t_0 - \sum_{j=1}^{s(\bar{t})}\tau_j - \frac{3}{4}\tau_{s(\bar{t})+1} - \frac{\tau_{s(\bar{t})+2}}{2} + \frac{\tau_{0,1}}{2} + \tan^{-1}\left(\frac{a_{0,1} - a_2}{a_{0,1} + a_2} \cdot \tan\left(\frac{\omega_0}{2}\left(\tau_{0,1} + \frac{\tau_{s(\bar{t})+1}}{2} + \tau_{s(\bar{t})+2}\right)\right)\right)\right) + \phi\right) +$$

$$+ \sum_{i=3}^{N(\bar{t})-1} a_i \cdot \sin\left(\omega_0\left(\bar{t} - t_0 - \sum_{j=1}^{s(\bar{t})-1}\tau_j - \sum_{k=0}^{i}\tau_{s(\bar{t})+k}\right) + \phi\right) = \qquad \text{(A5)}$$

$$= a_{0,2} \cdot \sin\left(\omega_0\left(\bar{t} - t_0 - \sum_{j=1}^{s(\bar{t})}\tau_j - \frac{3}{4}\tau_{s(\bar{t})+1} - \frac{\tau_{s(\bar{t})+2}}{2} + \frac{\tau_{0,1}}{2} + \tau_{0,2}\right) + \phi\right) + \sum_{i=3}^{N(\bar{t})-1} a_i \cdot \sin\left(\omega_0\left(\bar{t} - t_0 - \sum_{j=1}^{s(\bar{t})-1}\tau_j - \sum_{k=0}^{i}\tau_{s(\bar{t})+k}\right) + \phi\right)$$

still having defined $a_{0,2} = \sqrt{a_{0,1}^2 + a_2^2 + 2a_{0,1}a_2 \cdot \cos\left(\omega_0\left(\tau_{0,1} + \dfrac{\tau_{s(\bar{i})+1}}{2} + \tau_{s(\bar{i})+2}\right)\right)}$ and

$$\tau_{0,2} = \tan^{-1}\left(\frac{a_{0,1} - a_2}{a_{0,1} + a_2} \cdot \tan\left(\frac{\omega_0}{2}\left(\tau_{0,1} + \frac{\tau_{s(\bar{i})+1}}{2} + \tau_{s(\bar{i})+2}\right)\right)\right).$$

Therefore, iterating the previous derivation,

$$
\begin{aligned}
x(\bar{i}) &= a_{0,M(\bar{i})-1} \cdot \sin\left(\omega_0\left(\bar{i} - t_0 - \sum_{j=1}^{s(\bar{i})}\tau_j - \sum_{k=1}^{M(\bar{i})-1}\frac{2^{M(\bar{i})-k}-1}{2^{M(\bar{i})-k}}\tau_{s(\bar{i})+k} + \sum_{k=1}^{M(\bar{i})-2}\frac{\tau_{0,k}}{2^{M(\bar{i})-1-k}} + \tau_{0,M(\bar{i})-1}\right) + \phi\right) = \\
&= \sqrt{a_{0,M(\bar{i})-2}^2 + a_{M(\bar{i})-1}^2 + 2a_{0,M(\bar{i})-2}a_{M(\bar{i})-1} \cdot \cos\left(\omega_0\left(\sum_{k=1}^{M(\bar{i})-2}\frac{\tau_{0,k}}{2^{M(\bar{i})-2-k}} + \sum_{k=1}^{M(\bar{i})-1}\frac{\tau_{s(\bar{i})+k}}{2^{M(\bar{i})-1-k}}\right)\right)} \cdot \sin\left(\omega_0\left(\bar{i} - t_0 - \sum_{j=1}^{s(\bar{i})}\tau_j - \sum_{k=1}^{M(\bar{i})-1}\frac{2^{M(\bar{i})-k}-1}{2^{M(\bar{i})-k}}\tau_{s(\bar{i})+k} + \sum_{k=1}^{M(\bar{i})-1}\frac{\tau_{0,k}}{2^{M(\bar{i})-1-k}}\right) + \phi\right) = \\
&= \sqrt{a_{0,M(\bar{i})-2}^2 + a_{M(\bar{i})-1}^2 + 2a_{0,M(\bar{i})-2}a_{M(\bar{i})-1} \cdot \cos\left(\omega_0\left(\sum_{k=1}^{M(\bar{i})-2}\frac{\tau_{0,k}}{2^{M(\bar{i})-2-k}} + \sum_{k=1}^{M(\bar{i})-1}\frac{\tau_{s(\bar{i})+k}}{2^{M(\bar{i})-1-k}}\right)\right)} \cdot \sin\left(\omega_0\left(\bar{i} - t_0 - \sum_{j=1}^{s(\bar{i})+M(\bar{i})-1}\tau_j + \sum_{k=1}^{M(\bar{i})-1}\frac{\tau_{s(\bar{i})+k}}{2^{M(\bar{i})-k}} + \sum_{k=1}^{M(\bar{i})-1}\frac{\tau_{0,k}}{2^{M(\bar{i})-1-k}}\right) + \phi\right),
\end{aligned}
\tag{A6}
$$

where the generic parameters $a_{0,i}$ and $\tau_{0,i}$ can be defined recursively in the following manner

$$
\begin{cases}
a_{0,i} = \sqrt{a_{0,i-1}^2 + a_i^2 + 2a_{0,i-1}a_i \cdot \cos\left(\omega_0\left(\displaystyle\sum_{j=1}^{i-1}\frac{\tau_{0,j}}{2^{i-1-j}} + \sum_{j=1}^{i}\frac{\tau_{s(\bar{i})+j}}{2^{i-j}}\right)\right)}, \\[2ex]
\tau_{0,i} = \tan^{-1}\left(\dfrac{a_{0,i-1} - a_i}{a_{0,i-1} + a_i} \cdot \tan\left(\dfrac{\omega_0}{2}\left(\displaystyle\sum_{j=1}^{i-1}\frac{\tau_{0,j}}{2^{i-1-j}} + \sum_{j=1}^{i}\frac{\tau_{s(\bar{i})+j}}{2^{i-j}}\right)\right)\right).
\end{cases}
\tag{A7}
$$

## Appendix B

Consider expression (17)

$$x(\bar{i}) = \sqrt{a_{0,M(\bar{i})-2}^2 + a_{M(\bar{i})-1}^2 + 2a_{0,M(\bar{i})-2}a_{M(\bar{i})-1} \cdot \cos\left(\omega_0\left(\sum_{k=1}^{M(\bar{i})-2}\frac{\tau_{0,k}}{2^{M(\bar{i})-2-k}} + \sum_{k=1}^{M(\bar{i})-1}\frac{\tau_{s(\bar{i})+k}}{2^{M(\bar{i})-1-k}}\right)\right)} \cdot \sin\left(\omega_0\left(\bar{i} - t_0 - \sum_{j=1}^{s(\bar{i})+M(\bar{i})-1}\tau_j + \sum_{k=1}^{M(\bar{i})-1}\frac{\tau_{s(\bar{i})+k}}{2^{M(\bar{i})-k}} + \sum_{k=1}^{M(\bar{i})-1}\frac{\tau_{0,k}}{2^{M(\bar{i})-1-k}}\right)\right)$$

$$x(\bar{t}) = \sqrt{a_0^2 + a_1^2 + 2a_0 a_1 \cdot \cos\left(\omega_0 \left(\tau_{0,1} + \tau\right)\right)} \cdot \sin\left(\omega_0\left(\bar{t} - t_0 - \tau + \frac{\tau}{2} + \tau_{0,1}\right)\right) =$$

$$= \sqrt{2a^2 + 2a^2 \cdot \cos\left(\omega_0\left(\tau_{0,1} + \tau\right)\right)} \cdot \sin\left(\omega_0\left(\bar{t} - t_0 - \tau + \frac{\tau}{2} + \tau_{0,1}\right)\right) = \tag{B1}$$

$$= 2a\sqrt{\frac{1 + \cos\left(\omega_0\left(\tau_{0,1} + \tau\right)\right)}{2}} \cdot \sin\left(\omega_0\left(\bar{t} - t_0 - \frac{\tau}{2} + \tau_{0,1}\right)\right) =$$

$$= 2a \cdot \cos\left(\frac{\omega_0\left(\tau_{0,1} + \tau\right)}{2}\right) \cdot \sin\left(\omega_0\left(\bar{t} - t_0 - \frac{\tau}{2} + \tau_{0,1}\right)\right).$$

Now, by using expression (18) in order to retrieve $\tau_{0,1}$, with the same assumption we get

$$\tau_{0,1} = \tan^{-1}\left(\frac{a_0 - a_1}{a_0 + a_1} \cdot \tan\left(\frac{\omega_0}{2}\tau\right)\right) = 0, \tag{B2}$$

being $a_0 = a_1 = a$. Therefore, in this specific case,

$$x(\bar{t}) = 2a \cdot \cos\left(\frac{\omega_0\tau}{2}\right) \cdot \sin\left(\omega_0\left(\bar{t} - t_0 - \frac{\tau}{2}\right)\right), \tag{B3}$$

which corresponds to equation (10) if $a = 1$.

Appendix C

We want to compute the total phase jump in three different situations. In the first case, after the time instant $t$, a discontinuity of the phase signal is encountered in $t_{d2}$ due to the termination of the first interfering burst and another one in $t_{d3}$ due to the beginning of a new burst. In such a case

$$\Delta \vartheta_{RF}\left(t_{d3}\right) = \omega_0\left(t_{d3} - t_{s(\bar{t})+N(\bar{t})-1}\right) + \omega_0 \sum_{k=1}^{N(\bar{t})-1} \frac{\tau_{s(\bar{t})+k+1}}{2^{N(\bar{t})-k}} + \omega_0 \sum_{k=1}^{N(\bar{t})-1} \frac{\tau_{1,k+1}}{2^{N(\bar{t})-k-1}} +$$

$$- \omega_0\left(t_{d3} - t_{s(\bar{t})+N(\bar{t})-1}\right) - 2 \cdot \omega_0 \sum_{k=1}^{N(\bar{t})-2} \frac{\tau_{s(\bar{t})+k+1}}{2^{N(\bar{t})-k}} - 2 \cdot \omega_0 \sum_{k=1}^{N(\bar{t})-2} \frac{\tau_{1,k+1}}{2^{N(\bar{t})-1-k}} = \tag{C1}$$

$$= \omega_0\left(\frac{\tau_{s(\bar{t})+N(\bar{t})}}{2} - \sum_{k=1}^{N(\bar{t})-2} \frac{\tau_{s(\bar{t})+k+1}}{2^{N(\bar{t})-k}}\right) + \omega_0\left(\tau_{1,N(\bar{t})} - \sum_{k=1}^{N(\bar{t})-2} \frac{\tau_{1,k+1}}{2^{N(\bar{t})-k-1}}\right).$$

For the phase jump in $t_{d2}$ it can be used the expression (20) which has been derived for the same condition, ant thus

$$\Delta\vartheta_{RF}\big|_{tot} = \Delta\vartheta_{RF}(t_{d2}) + \Delta\vartheta_{RF}(t_{d3}) =$$

$$= \omega_0\left(-\frac{\tau_{s(\bar{i})+1}}{2^{N(\bar{i})-1}}\right) + \omega_0\left(\sum_{k=1}^{N(\bar{i})-1}\frac{2\tau_{1,k+1}-\tau_{0,k}}{2^{N(\bar{i})-1-k}} - \tau_{1,N(\bar{i})}\right) +$$

$$+ \omega_0\left(\frac{\tau_{s(\bar{i})+N(\bar{i})}}{2} - \sum_{k=1}^{N(\bar{i})-2}\frac{\tau_{s(\bar{i})+k+1}}{2^{N(\bar{i})-k}}\right) + \omega_0\left(\tau_{1,N(\bar{i})} - \sum_{k=1}^{N(\bar{i})-2}\frac{\tau_{1,k+1}}{2^{N(\bar{i})-k-1}}\right) = \qquad (C2)$$

$$= \omega_0\left(-\frac{\tau_{s(\bar{i})+1}}{2^{N(\bar{i})-1}} - \sum_{k=2}^{N(\bar{i})}\frac{\tau_{s(\bar{i})+k}}{2^{N(\bar{i})-k+1}}\right) + \omega_0\left(\sum_{k=1}^{N(\bar{i})-1}\frac{2\tau_{1,k+1}-\tau_{0,k}}{2^{N(\bar{i})-1-k}}\right).$$

In a similar manner it can be retrieved the phase jump after two successive discontinuities in $t_{d2}$ and $t_{d3}$, respectively due to a burst beginning and to a burst termination.

In this case,

$$\Delta\vartheta_{RF}(t_{d3}) = \omega_0\left(t_{d3} - t_{s(\bar{i})+N(\bar{i})-1}\right) + \omega_0\sum_{k=1}^{N(\bar{i})-1}\frac{\tau_{s(\bar{i})+k+1}}{2^{N(\bar{i})-k}} + \omega_0\sum_{k=1}^{N(\bar{i})-1}\frac{\tau_{1,k+1}}{2^{N(\bar{i})-k-1}} +$$

$$-\omega_0\left(t_{d3} - t_{s(\bar{i})+N(\bar{i})}\right) - \omega_0\sum_{k=1}^{N(\bar{i})}\frac{\tau_{s(\bar{i})+k}}{2^{N(\bar{i})-k-1}} - \omega_0\sum_{k=1}^{N(\bar{i})}\frac{\tau_{0,k}}{2^{N(\bar{i})-k}} = \qquad (C3)$$

$$= \omega_0\left(-\frac{\tau_{s(\bar{i})+1}}{2^{N(\bar{i})}}\right) + \omega_0\left(-\tau_{0,N(\bar{i})} + \sum_{k=1}^{N(\bar{i})-1}\frac{2\tau_{1,k+1}-\tau_{0,k}}{2^{N(\bar{i})-k-1}}\right).$$

And therefore, by using the expression (21)

$$\Delta\vartheta_{RF}\big|_{tot} = \Delta\vartheta_{RF}(t_{d2}) + \Delta\vartheta_{RF}(t_{d3}) =$$

$$= \omega_0\left(-\frac{1}{2}\tau_{s(\bar{i})+N(\bar{i})} - \sum_{k=1}^{N(\bar{i})-1}\frac{\tau_{s(\bar{i})+k}}{2^{N(\bar{i})-k+1}}\right) + \omega_0\left(\tau_{0,N(\bar{i})} - \sum_{k=1}^{N(\bar{i})-1}\frac{\tau_{0,k}}{2^{N(\bar{i})-k}}\right) +$$

$$+ \omega_0\left(-\frac{\tau_{s(\bar{i})+1}}{2^{N(\bar{i})}}\right) + \omega_0\left(-\tau_{0,N(\bar{i})} + \sum_{k=1}^{N(\bar{i})-1}\frac{2\tau_{1,k+1}-\tau_{0,k}}{2^{N(\bar{i})-k-1}}\right) = \qquad (C4)$$

$$= \omega_0\left(-\frac{\tau_{s(\bar{i})+1}}{2^{N(\bar{i})-1}} - \sum_{k=2}^{N(\bar{i})}\frac{\tau_{s(\bar{i})+k}}{2^{N(\bar{i})-k+1}}\right) + \omega_0\left(\sum_{k=1}^{N(\bar{i})-1}\frac{2\tau_{1,k+1}-\tau_{0,k}}{2^{N(\bar{i})-1-k}}\right).$$

Therefore, by comparing expression (C2) and (C4), it has been demonstrated that in the two considered case, the total phase jump is equivalent. Moreover, this value is also equal to the single phase jump expressed in expression (22) which is derived for a specific case that happens when the two discontinuities are contemporary.

## Appendix D

In this section, it is considered a derivation of expression (39), that is,

$$x(\bar{t}) = 2 \cdot \sum_{s=0}^{S-1} b_s \cdot \sum_{i=0}^{N(\bar{i})-1} a_i \cdot \cos\left(\omega_0\left(\bar{t} - t_0 - \sum_{j=1}^{s(\bar{i})-1}\tau_j - \sum_{k=0}^{i}\tau_{s(i)+k} - t_s^d(\bar{t})\right) + \phi\right), \quad \bar{t} \in (t_{d1}, t_{d2}), \tag{D1}$$

being $t_{d1}$ and $t_{d2}$ the immediately previous and immediately successive discontinuities with respect to $t = \bar{t}$ respectively, thus having the following expression.

$$\begin{cases} t_{d1} &= \max(t_{s(\bar{i})-1} + T, \quad t_{s(\bar{i})+N(\bar{i})-1}), \\ t_{d2} &= \min(t_{s(\bar{i})} + T, \quad t_{s(\bar{i})+N(\bar{i})}). \end{cases}$$

By proceeding as in Appendix A, it is possible to write

$$x(\bar{t}) = 2 \cdot a_{0,N(\bar{i})-1} \cdot \sum_{s=0}^{S} b_s \cdot \cos\left(\omega_0\left(\bar{t} - t_0 - \sum_{j=1}^{s(\bar{i})+N(\bar{i})-1}\tau_j - \sum_{k=1}^{N(\bar{i})-1}\frac{\tau_{s(\bar{i})+k}}{2^{N(\bar{i})-k}} + \sum_{k=1}^{N(\bar{i})-1}\frac{\tau_{0,k}}{2^{N(\bar{i})-1-k}} - t_s^d(\bar{t})\right) + \phi\right) =$$

$$= 2 \cdot a_{0,N(\bar{i})-1} \cdot \sum_{s=0}^{S} b_s \cdot \cos\left(\omega_0\left(\bar{t} - \tau(\bar{t}) - t_s^d(\bar{t})\right) + \phi\right), \tag{D2}$$

where the terms $a_{0,i}$ and $\tau_{0,i}$ are expressed in (A7) and where the term

$$\tau(\bar{t}) = t_0 + \sum_{j=1}^{s(\bar{i})+N(\bar{i})-1}\tau_j + \sum_{k=1}^{N(\bar{i})-1}\frac{\tau_{s(\bar{i})+k}}{2^{N(\bar{i})-k}} - \sum_{k=1}^{N(\bar{i})-1}\frac{\tau_{0,k}}{2^{N(\bar{i})-1-k}} \quad \text{has been introduced for sake of}$$

simplicity.

Since this expression of $x(\bar{t})$ is still a summation of sinusoids, an approach similar to the one disclosed in Appendix A can be followed in order to remove the sum sign. In particular,

$$
\begin{aligned}
x(\bar{t}) = 2 \cdot a_{0,N(\bar{t})-1} \cdot \Bigg\{ & b_0 \cdot \sin\!\big(\omega_0(\bar{t}-\tau(\bar{t}))+\phi\big) + b_1 \cdot \sin\!\big(\omega_0(\bar{t}-\tau(\bar{t})+t_1^d(\bar{t}))+\phi\big) + \sum_{s=2}^{S} b_s \cdot \sin\!\big(\omega_0(\bar{t}-\tau(\bar{t})-t_s^d(\bar{t}))+\phi\big) \Bigg\} = \\[2mm]
= 2 \cdot a_{0,N(\bar{t})-1} \cdot \Bigg\{ & (b_0+b_1) \cdot \cos\!\left(\omega_0\!\left(\frac{t_1^d(\bar{t})}{2}\right)\right) \cdot \sin\!\left(\omega_0\!\left(\bar{t}-\tau(\bar{t})+\frac{t_1^d(\bar{t})}{2}\right)+\phi\right) + \\[2mm]
+ & (b_0-b_1) \cdot \sin\!\left(\omega_0\!\left(\frac{t_1^d(\bar{t})}{2}\right)\right) \cdot \cos\!\left(\omega_0\!\left(\bar{t}-\tau(\bar{t})+\frac{t_1^d(\bar{t})}{2}\right)+\phi\right) + \\[2mm]
+ & \sum_{s=2}^{S} b_s \cdot \sin\!\big(\omega_0(\bar{t}-\tau(\bar{t})-t_s^d(\bar{t}))+\phi\big) \Bigg\} = \\[2mm]
= 2 \cdot a_{0,N(\bar{t})-1} \cdot \Bigg\{ & \sqrt{b_0^{\,2}+b_1^{\,2}+2b_0 b_1 \cdot \cos\!\big(\omega_0(t_1^d(\bar{t}))\big)} \cdot \sin\!\left(\omega_0\!\left(\bar{t}-\tau(\bar{t})+\frac{t_1^d(\bar{t})}{2}+\tan^{-1}\!\left(\frac{b_0-b_1}{b_0+b_1}\cdot\tan\!\left(\frac{\omega_0}{2}(t_1^d(\bar{t}))\right)\right)\right)+\phi\right) + \\[2mm]
+ & \sum_{s=2}^{S} b_s \cdot \sin\!\big(\omega_0(\bar{t}-\tau(\bar{t})-t_s^d(\bar{t}))+\phi\big) \Bigg\}.
\end{aligned}
\tag{D3}
$$

Then, naming $b_{0,1}=\sqrt{b_0^{\,2}+b_1^{\,2}+2b_0 b_1 \cdot \cos\!\big(\omega_0(t_1^d(\bar{t}))\big)}$ and

$\varsigma_{0,1} = \tan^{-1}\!\left(\dfrac{b_0-b_1}{b_0+b_1}\cdot\tan\!\left(\dfrac{\omega_0}{2}(t_1^d(\bar{t}))\right)\right)$ and repeating the same procedure,

$$
\begin{aligned}
x(\bar{t}) = 2 \cdot a_{0,N(\bar{t})-1} \cdot \Bigg\{ & b_{0,1} \cdot \sin\!\left(\omega_0\!\left(\bar{t}-\tau(\bar{t})+\frac{t_1^d(\bar{t})}{2}+t_{0,1}^d(\bar{t})\right)+\phi\right) + b_2 \cdot \sin\!\left(\omega_0\!\left(\bar{t}-\tau(\bar{t})+\frac{t_1^d(\bar{t})}{2}-t_2^d(\bar{t})\right)+\phi\right) + \\[2mm]
+ & \sum_{s=3}^{S} b_s \cdot \sin\!\left(\omega_0\!\left(\bar{t}-\tau(\bar{t})+\frac{t_1^d(\bar{t})}{2}-t_s^d(\bar{t})\right)+\phi\right) \Bigg\} = \\[2mm]
= 2 \cdot a_{0,N(\bar{t})-1} \cdot \Bigg\{ & (b_{0,1}+b_2) \cdot \cos\!\left(\omega_0\!\left(-\frac{t_1^d(\bar{t})}{4}+\frac{t_2^d(\bar{t})}{2}+\frac{t_{0,1}^d(\bar{t})}{2}\right)\right) \cdot \sin\!\left(\omega_0\!\left(\bar{t}-\tau(\bar{t})-\frac{t_1^d(\bar{t})}{4}-\frac{t_2^d(\bar{t})}{2}+\frac{t_{0,1}^d(\bar{t})}{2}\right)+\phi\right) + \\[2mm]
+ & (b_{0,1}-b_2) \cdot \sin\!\left(\omega_0\!\left(-\frac{t_1^d(\bar{t})}{4}+\frac{t_2^d(\bar{t})}{2}+\frac{t_{0,1}^d(\bar{t})}{2}\right)\right) \cdot \cos\!\left(\omega_0\!\left(\bar{t}-\tau(\bar{t})-\frac{t_1^d(\bar{t})}{4}-\frac{t_2^d(\bar{t})}{2}+\frac{t_{0,1}^d(\bar{t})}{2}\right)+\phi\right) + \\[2mm]
+ & \sum_{s=3}^{S} b_s \cdot \sin\!\left(\omega_0\!\left(\bar{t}-\tau(\bar{t})+\frac{t_1^d(\bar{t})}{2}-t_s^d(\bar{t})\right)+\phi\right) \Bigg\} = \\[2mm]
= 2 \cdot a_{0,N(\bar{t})-1} \cdot \Bigg\{ & \sqrt{b_{0,1}^{\,2}+b_2^{\,2}+2b_{0,1} b_2 \cdot \cos\!\left(\omega_0\!\left(-\frac{t_1^d(\bar{t})}{2}+t_2^d(\bar{t})+t_{0,1}^d(\bar{t})\right)\right)} \cdot \\[2mm]
& \cdot \sin\!\left(\omega_0\!\left(\bar{t}-\tau(\bar{t})-\frac{t_1^d(\bar{t})}{4}-\frac{t_2^d(\bar{t})}{2}+\frac{t_{0,1}^d(\bar{t})}{2}+\tan^{-1}\!\left(\frac{b_{0,1}-b_2}{b_{0,1}+b_2}\cdot\tan\!\left(\frac{\omega_0}{2}\!\left(-\frac{t_1^d(\bar{t})}{2}+t_2^d(\bar{t})+t_{0,1}^d(\bar{t})\right)\right)\right)\right)+\phi\right) + \\[2mm]
+ & \sum_{s=3}^{S} b_s \cdot \sin\!\left(\omega_0\!\left(\bar{t}-\tau(\bar{t})+\frac{t_1^d(\bar{t})}{2}-t_s^d(\bar{t})\right)+\phi\right) \Bigg\} = \\[2mm]
= 2 \cdot a_{0,N(\bar{t})-1} \cdot \Bigg\{ & b_{0,2} \cdot \sin\!\left(\omega_0\!\left(\bar{t}-\tau(\bar{t})-\frac{t_1^d(\bar{t})}{4}-\frac{t_2^d(\bar{t})}{2}+\frac{t_{0,1}^d(\bar{t})}{2}+t_{0,2}^d(\bar{t})\right)+\phi\right) + \sum_{s=3}^{S} b_s \cdot \sin\!\left(\omega_0\!\left(\bar{t}-\tau(\bar{t})+\frac{t_1^d(\bar{t})}{2}-t_s^d(\bar{t})\right)+\phi\right) \Bigg\},
\end{aligned}
\tag{D4}
$$

still having defined $b_{0,2} = \sqrt{b_{0,1}^2 + b_2^2 + 2b_{0,1}b_2 \cdot \cos\left(\omega_0\left(-\dfrac{t_1^d(\bar{t})}{2} + t_2^d(\bar{t}) + t_{0,1}^d(\bar{t})\right)\right)}$ and

$$t_{0,2}^d(\bar{t}) = \tan^{-1}\left(\frac{b_{0,1} - b_1}{b_{0,1} + b_1} \cdot \tan\left(\frac{\omega_0}{2}\left(-\frac{t_1^d(\bar{t})}{2} + t_2^d(\bar{t}) + t_{0,1}^d(\bar{t})\right)\right)\right).$$

Then, applying iteratively the previous process, we finally arrive at

$$x(\bar{t}) = 2 \cdot a_{0,N(\bar{t})-1} \cdot \left\{ b_{0,S} \cdot \sin\left(\omega_0\left(\bar{t} - \tau(\bar{t}) - \sum_{k=1}^{S}\frac{t_k^d(\bar{t})}{2^{S+1-k}} + \sum_{k=1}^{S}\frac{t_{0,k}^d(\bar{t})}{2^{S-k-1}}\right) + \phi\right)\right\} = \quad \text{(D5)}$$

$$= 2 \cdot a_{0,N(\bar{t})-1} \cdot \left\{ b_{0,S} \cdot \sin\left(\omega_0\left(\bar{t} - t_0 - \sum_{j=1}^{s(\bar{t})+N(\bar{t})-1}\tau_j - \sum_{k=1}^{N(\bar{t})-1}\frac{\tau_{s(\bar{t})+k}}{2^{N(\bar{t})-k}} + \sum_{k=1}^{N(\bar{t})-1}\frac{\tau_{0,k}}{2^{N(\bar{t})-1-k}} - \sum_{k=1}^{S}\frac{t_k^d(\bar{t})}{2^{S+1-k}} + \sum_{k=1}^{S}\frac{t_{0,k}^d(\bar{t})}{2^{S-k-1}}\right) + \phi\right)\right\},$$

where the generic parameters $b_{0,i}$ and $t_{0,i}^d(\bar{t})$ are defined as follows

$$\begin{cases} b_{0,i} = \sqrt{b_{0,i-1}^2 + b_i^2 + 2b_{0,i-1}b_i \cdot \cos\left(\omega_0\left(t_i^d(\bar{t}) - \sum_{j=1}^{i-1}\frac{t_j^d(\bar{t})}{2^{i-j}} + \sum_{j=1}^{i-1}\frac{t_{0,j}^d(\bar{t})}{2^{i-1-j}}\right)\right)}, \\ t_{0,i}^d(\bar{t}) = \tan^{-1}\left(\frac{b_{0,i-1} - b_i}{b_{0,i-1} + b_i} \cdot \tan\left(\frac{\omega_0}{2}\left(t_i^d(\bar{t}) - \sum_{j=1}^{i-1}\frac{t_j^d(\bar{t})}{2^{i-j}} + \sum_{j=1}^{i-1}\frac{t_{0,j}^d(\bar{t})}{2^{i-1-j}}\right)\right)\right). \end{cases} \quad \text{(D6)}$$

## Claims

1. A method for determining the spatial distribution of scatterers of a target object comprising the following steps:

   a) transmitting an ultrasound signal interacting with the object;
   b) receiving ultrasoundsignal or signals generated by the scatterers of the object in response to said transmitting signal,
   c) extracting a phase signal from such response signal or signals;
   d) determining discontinuities in such phase signal;
   e) relating such discontinuities to the spatial distribution of such scatterers of the object,

   **characterized in that** structures and/or interfaces are identified by detecting couples of discontinuities located at a temporal distance determined as a function of a parameter of the transmission signal.

2. Method according to claim 1, further comprising the step of applying one or more statistic operators to such phase signal to obtain a detection signal, the spatial distribution of such structures and/or interfaces of the object being determined by detecting the discontinuities in such detection signal.

3. Method according to claim 1 or 2, further comprising the step of calculating the derivative of such phase signal and/or detection signal.

4. Method according to any claim 1 to 3, wherein the transmission signal comprises a burst having length T, the parameter of the transmission signal being such length T.

5. Method according to claim 4, wherein the temporal distance is the burst length T.

6. Method according to any preceding claim, wherein more bursts having different length $T_i$ are transmitted, structures and/or interfaces being identified by detecting couples of discontinuities located at the temporal distance $T_i$ corresponding to the length of the transmitted burst.

7. Method according to claim 6, **characterized in** comprising the following steps:

   a) transmitting a burst signal having length $T_i$;
   b) extracting the phase signal and/or detection signal from the received signal;
   c) detecting discontinuities in such phase signal and/or detection signal;
   d) for each detected discontinuity, verifying if a corresponding discontinuity exists at the temporal distance $T_i$;
   e) associating such couple of detected discontinuities to a structure and/or interface;
   f) transmitting a burst having different length $T_j$ to verify if the remaining uncoupled discontinuities have corresponding discontinuities at the temporal distance $T_j$;
   g) associating such couple of detected discontinuities to a structure and/or interface;
   h) if uncoupled discontinuities still exist, repeating step f) for a predefined maximum number n of iterations whereby at each iteration the length of the transmitted burst is varied.

8. Method according to any preceding claim, wherein the derivative of the phase signal and/or of the detection signal is calculated, such derivative signal being combined with, preferably added in modulus with, a replica of the same time shifted by the length or a multiple of the length of the transmitting burst, the resulting signal being used for determining discontinuities in the phase signal and/or detection signal.

9. Method according to any preceding claim, wherein the detection signal is determined by calculating the statistical moment or moments of the first derivative of the phase of the received signal or signals.

10. Method according to claim 9, wherein phase jumps in the detected discontinuities are calculated to determine a parameter related to the concentration of scatterers and/or a mean distance between scatterers in the target object.

11. Method according to any preceding claim, wherein detected pairs of discontinuities are transformed into an image data, i.e. image pixels or voxels, of the target object.

12. Method according to claim 11, wherein such image data are superimposed on an image of the object obtained with the same or a different modality.

13. Method according to any preceding claim, wherein discontinuities in the phase signal are tracked in time to identify moving features.

14. Method according to any of the preceding claim, wherein at least one received signal is an ultrasonic signal.

15. Method according to any preceding claim, wherein discontinuities in the phase signal are detected to filter speckle in an echographic image.

16. Echography device comprising an echography probe and means of acquiring and processing a return signal from a structure subjected to echographic examination, **characterized in that** said acquisition and processing means is programmed to implement a method according to one or more of the preceding claims.


**Patentansprüche**

1. Verfahren zum Bestimmen der räumlichen Verteilung von Streuern eines Zielobjekts, umfassend die folgenden Schritte:

   a) Senden eines Ultraschallsignals, das mit dem Objekt interagiert;

b) Empfangen eines Ultraschallsignals oder von Ultraschallsignalen, das bzw. die von den Streuern des Objekts als Reaktion auf das Übertragungssignal erzeugt wird bzw. werden;

c) Extrahieren eines Phasensignals aus dem einem oder den mehreren solchen Antwortsignal(en);

d) Bestimmen von Diskontinuitäten in einem solchen Phasensignal;

e) Beziehen solcher Diskontinuitäten auf die räumliche Verteilung solcher Streuer des Objekts,

**dadurch gekennzeichnet, dass** Strukturen und/oder Grenzflächen durch Erfassen von Diskontinuitätspaaren identifiziert werden, die sich in einer räumlichen Distanz befinden, wie abhängig von einem Parameter des Übertragungssignals bestimmt wird.

2. Verfahren nach Anspruch 1, des Weiteren umfassend den Schritt des Anwendens einer oder mehrerer Operatoren an einem solchen Phasensignal, um ein Erfassungssignal zu erhalten, wobei die räumliche Verteilung solcher Strukturen und/oder Grenzflächen des Objekts durch Erfassen der Diskontinuitäten in einem solchen Erfassungssignal bestimmt werden.

3. Verfahren nach Anspruch 1 oder 2, des Weiteren umfassend den Schritt des Berechnens der Ableitung eines solchen Phasensignals und/oder Erfassungssignals.

4. Verfahren nach einem der Ansprüche 1 bis 3, wobei das Übertragungssignal einen Burst mit einer Länge T aufweist, wobei der Parameter des Übertragungssignals eine solche Länge T ist.

5. Verfahren nach Anspruch 4, wobei die zeitliche Distanz die Burst-Länge T ist.

6. Verfahren nach einem der vorangehenden Ansprüche, wobei mehr Bursts mit unterschiedlicher Länge $T_i$ übertragen werden, wobei Strukturen und/oder Grenzflächen durch Erfassen von Diskontinuitätspaaren identifiziert werden, die sich in der zeitlichen Distanz $T_i$ befinden, die der Länge des übertragenen Bursts entspricht.

7. Verfahren nach Anspruch 6, **dadurch gekennzeichnet, dass** es die Schritte umfasst:

a) Senden eines Burst-Signals mit einer Länge $T_i$;

b) Extrahieren des Phasensignals und/oder Erfassungssignals aus dem empfangenen Signal;

c) Erfassen von Diskontinuitäten in einem solchen Phasensignal und/oder Erfassungssignal;

d) für jede erfasste Diskontinuität Verifizieren, ob eine entsprechende Diskontinuität als zeitliche Distanz $T_i$ vorhanden ist;

e) Zuordnen eines solchen Paares erfasster Diskontinuitäten zu einer Struktur und/oder Grenzfläche;

f) Senden eines Bursts mit unterschiedlicher Länge $T_j$ zum Verifizieren, ob die verbleibenden, ungepaarten Diskontinuitäten entsprechende Diskontinuitäten in der zeitlichen Distanz $T_j$ haben;

g) Zuordnen eines solchen Paares erfasster Diskontinuitäten zu einer Struktur und/oder Grenzfläche;

h) falls noch ungepaarte Diskontinuitäten vorhanden sind, Wiederholen von Schritt f) in einer vordefinierten maximalen Anzahl n von Wiederholungen, wobei bei jeder Wiederholung die Länge des gesendeten Bursts variiert wird.

8. Verfahren nach einem der vorangehenden Ansprüche, wobei die Ableitung des Phasensignals und/oder Erfassungssignals berechnet wird, ein solches Ableitungssignal mit einer Replik derselben Zeit, verschoben um die Länge eines Vielfachen der Länge des gesendeten Bursts, kombiniert, vorzugsweise als Quadrat-Modul mit dieser addiert, wird, wobei das erhaltene Signal zur Bestimmung von Diskontinuitäten im Phasensignal und/oder Erfassungssignal verwendet wird.

9. Verfahren nach einem der vorangehenden Ansprüche, wobei das Erfassungssignal durch Berechnen des statistischen Moments oder der statistischen Momente der ersten Ableitung der Phase des empfangenen Signals oder der empfangenen Signale bestimmt wird.

10. Verfahren nach Anspruch 9, wobei Phasensprünge in den erfassten Diskontinuitäten berechnet werden, um einen Parameter zu bestimmen, der mit der Konzentration von Streuern und/oder einer mittleren Distanz zwischen Streuern im Zielobjekt zusammenhängt.

11. Verfahren nach einem der vorangehenden Ansprüche, wobei erfasste Paare von Diskontinuitäten in Bilddaten, d.h., Bildpixel oder -voxel, des Zielobjekts umgeformt werden.

**12.** Verfahren nach Anspruch 11, wobei solche Bilddaten auf ein Bild des Objekts überlagert werden, das mit derselben oder einer anderen Modalität erhalten wird.

**13.** Verfahren nach einem der vorangehenden Ansprüche, wobei Diskontinuitäten im Phasensignal zeitlich verfolgt werden, um sich bewegende Merkmale zu identifizieren.

**14.** Verfahren nach einem der vorangehenden Ansprüche, wobei zumindest ein empfangenes Signal ein Ultraschallsignal ist.

**15.** Verfahren nach einem der vorangehenden Ansprüche, wobei Diskontinuitäten im Phasensignal zum Filtern von Specklemustern im echografischen Bereich erfasst werden.

**16.** Echografische Vorrichtung, die eine Echografiesonde und Mittel zum Erfassen und Verarbeiten eines Retoursignals von einer Struktur, die einer echografischen Untersuchung unterzogen wird, enthält, **dadurch gekennzeichnet, dass** das Mittel zum Erfassen und Verarbeiten zur Ausführung eines Verfahrens nach einem oder mehreren der vorangehenden Ansprüche programmiert ist.

**Revendications**

**1.** Procédé pour déterminer la distribution spatiale de diffuseurs d'un objet cible comprenant les étapes suivantes:

    a) transmettre un signal d'ultrasons en interaction avec l'objet;
    b) recevoir un ou des signaux d'ultrasons produits par les diffuseurs de l'objet en réponse audit signal de transmission,
    c) extraire un signal de phase d'un signal ou de signaux de réponse précités;
    d) déterminer des discontinuités dans un tel signal de phase;
    e) mettre en relation ces discontinuités avec la distribution spatiale de ces diffuseurs de l'objet,

**caractérisé en ce que** des structures et/ou interfaces sont identifiées en détectant des couples de discontinuités situés à une distance temporelle déterminée comme une fonction d'un paramètre du signal de transmission.

**2.** Procédé selon la revendication 1, comprenant en outre l'étape consistant à appliquer un ou plusieurs opérateurs statistiques à un tel signal de phase pour obtenir un signal de détection, la distribution spatiale de ces structures et/ou interfaces de l'objet étant déterminée en détectant les discontinuités dans un tel signal de détection.

**3.** Procédé selon la revendication 1 ou 2, comprenant en outre l'étape consistant à calculer la dérivée d'un tel signal de phase et/ou signal de détection.

**4.** Procédé selon l'une quelconque des revendications 1 à 3, dans lequel le signal de transmission comprend une salve d'une longueur T, le paramètre du signal de transmission étant une telle longueur T.

**5.** Procédé selon la revendication 4, dans lequel la distance temporelle est la longueur de salve T.

**6.** Procédé selon l'une quelconque des revendications précédentes, dans lequel plusieurs salves de longueurs $T_i$ différentes sont transmises, des structures et/ou interfaces étant identifiées en détectant des couples de discontinuités situées à la distance temporelle $T_i$ correspondant à la longueur de la salve transmise.

**7.** Procédé selon la revendication 6, **caractérisé en** comprenant les étapes suivantes:

    a) transmettre un signal de salve d'une longueur $T_i$;
    b) extraire le signal de phase et/ou le signal de détection du signal reçu;
    c) détecter des discontinuités dans un tel signal de phase et/ou signal de détection;
    d) pour chaque discontinuité détectée, vérifier si une discontinuité correspondante existe à la distance temporelle Ti;
    e) associer un tel couple de discontinuités détectées à une structure et/ou interface;
    f) transmettre une salve d'une longueur différente $T_j$ pour vérifier si les discontinuités non couplées restantes ont des discontinuités correspondantes à la distance temporelle Tj;

g) associer un tel couple de discontinuités détectées à une structure et/ou interface;

h) si des discontinuités non couplées existent toujours, répéter l'étape f) pendant un nombre maximum prédéfini n d'itérations moyennant quoi à chaque itération, la longueur de la salve transmise varie.

**8.** Procédé selon l'une quelconque des revendications précédentes, dans lequel la dérivée du signal de phase et/ou du signal de détection est calculée, un tel signal de dérivé étant combiné avec, de préférence ajouté en module avec une réplique du même temps décalée selon la longueur ou un multiple de la longueur de la salve transmise, le signal obtenu étant utilisé pour déterminer des discontinuités dans le signal de phase et/ou signal de détection.

**9.** Procédé selon l'une quelconque des revendications précédentes, dans lequel le signal de détection est déterminé en calculant le ou les moments statistiques de la première dérivée de la phase du ou des signaux reçus.

**10.** Procédé selon la revendication 9, dans lequel des sauts de phase dans les discontinuités détectées sont calculés pour déterminer un paramètre lié à la concentration de diffuseurs et/ou une distance moyenne entre les diffuseurs dans l'objet cible.

**11.** Procédé selon l'une quelconque des revendications précédentes, dans lequel des paires de discontinuités détectées sont transformées en des données d'image, c'est-à-dire des pixels d'image ou des voxels de l'objet cible.

**12.** Procédé selon la revendication 11, dans lequel ces données d'image sont superposées à une image de l'objet obtenu avec la même modalité ou une modalité différente.

**13.** Procédé selon l'une quelconque des revendications précédentes, dans lequel des discontinuités dans le signal de phase sont suivies dans le temps pour identifier des caractéristiques mobiles.

**14.** Procédé selon l'une quelconque des revendications précédentes, dans lequel au moins un signal reçu est un signal ultrasonique.

**15.** Procédé selon l'une quelconque des revendications précédentes, dans lequel des discontinuités dans le signal de phase sont détectées pour filtrer des granularités dans une image échographique.

**16.** Dispositif d'échographie comprenant une sonde d'échographie et un moyen pour acquérir et traiter un signal de retour d'une structure soumise à un examen échographique, **caractérisé en ce que** ledit moyen d'acquisition et de traitement est programmé pour la réalisation d'un procédé selon l'une ou plusieurs des revendications précédentes.

Fig. 1

Fig. 2

Fig. 3

Fig. 4

Fig. 5

Fig. 6

Fig. 7a

Fig. 7b

Fig. 7c

EP 2 366 997 B1

Fig. 7d

Fig. 8

38

Fig. 9a

Fig. 9b

Fig. 10a

Fig. 10b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1341003 A
- US 4926870 A
- US 4913157 A
- US 4361154 A
- US 5817018 A
- US 5458130 A
- US 6221019 B
- US 6322507 B
- US 6328695 B
- US 6899680 B
- US 7112173 B
- US 4807635 A
- US 4777958 A
- US 5115808 A
- US 5453576 A
- US 7291109 B
- US 5062296 A
- US 5588032 A

### Non-patent literature cited in the description

- **GORDON S. KINO.** Acoustic Waves: Devices, Imaging, and Analog Signal Processing. Prentice-Hall, INC, 1987
- **L. WENG ; J. M. REID ; P. M. SHANKAR ; K. SOETANTO ; X. M. LU.** Nonuniform phase distribution in speckle analysis — Part I: Background and experimental demonstration. *IEEE Trans. Ultrason., Ferroelect., Freq. Contr.,* May 1992, vol. 39 (3), 352-358
- **L. WENG ; J. M. REID ; P. M. SHANKAR ; K. SOETANTO ; X. M. LU.** Nonuniform phase distribution in speckle analysis - Part II: Parametric Expression and a Frequency Sweeping Technique to Measure Mean Scatterer Spacing. *IEEE Trans. Ultrason., Ferroelect., Freq. Contr.,* May 1992, vol. 39 (3), 360-365
- **V. M. NARAYANAN ; R. C. MOLTHEN ; P. M. SHANKAR ; L. VERGARA ; J. M. REID.** Studies on Ultrasonic Scattering from Quasi-Periodic Structures. *IEEE Trans. Ultrason., Ferroelect., Freq. Contr.,* May 1992, vol. 44 (1), 114-124
- **S. O. RICE.** Statistical Properties of a Sine Wave Plus Random Noise. *Bell System Technical Journal,* January 1948, vol. J. 27, 109-157
- **N. G. GATKIN ; V. A. GERANIN ; M. I. KARNOVSKIY ; L. G. KRASNYY ; N. I. CHERNEY.** Probability density of phase derivative of the sum of a modulated signal and Gaussian noise. *Radio Eng. Electron. Phys. (USSR,* 1965, 1223-1229
- **RICE ; J. M. THIJSSEN ; B. J. OOSTERVELD ; R. L. ROMIJN.** *Phase-Derivative Imaging III: Theoretical Derivation of the First and Second Order Statistics, Ultrasonic Imaging,* 1990, 17-34
- **F. VIOLA ; W. WALKER.** A comparison of the performance of time-delay estimators in medical ultrasound. *IEEE Trans. Ultrason. Ferroelectr. Freq. Control,* April 2003, vol. 50 (4), 392-401
- **I. CÉSPEDES ; Y. HUANG ; J. OPHIR ; S. SPRATT.** Methods for estimation of subsample time delays of digitized echo signals. *Ultrason. Imag.,* April 1995, vol. 17, 142-171